(19) Europäisches Patentamt
European Patent Office
Office européen des brevets

(11) **EP 2 778 412 B1**

(12) **EUROPÄISCHE PATENTSCHRIFT**

(45) Veröffentlichungstag und Bekanntmachung des Hinweises auf die Patenterteilung:
**25.12.2019 Patentblatt 2019/52**

(21) Anmeldenummer: **13159616.5**

(22) Anmeldetag: **15.03.2013**

(51) Int Cl.:
*F04B 51/00* (2006.01)  *F04B 49/06* (2006.01)
*F04B 41/06* (2006.01)  *F04D 25/16* (2006.01)
*F04D 27/00* (2006.01)  *G05B 17/02* (2006.01)
*G05B 1/00* (2006.01)  *G05D 1/00* (2006.01)
*F04B 49/00* (2006.01)

(54) **ENTWICKLUNG EINES ÜBERGEORDNETEN MODELLS ZUM STEUERN UND/ODER ÜBERWACHEN EINER KOMPRESSORANLAGE**

DEVELOPMENT OF A SUPERIOR MODEL FOR CONTROLLING AND/OR SUPERVISING A COMPRESSOR SYSTEM

DÉVELOPPEMENT D'UN MODÈLE SUPÉRIEUR POUR CONTRÔLER ET/OU SURVEILLER UN SYSTÈME DE COMPRESSEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.09.2014 Patentblatt 2014/38**

(73) Patentinhaber: **KAESER KOMPRESSOREN SE 96450 Coburg (DE)**

(72) Erfinder:
• **Florian Wagner 95460 Coburg (DE)**

• **Anika Hartwich 95460 Coburg (DE)**
• **Andreas Birkenfeld 97753 Karlstadt (DE)**

(74) Vertreter: **Zech, Stefan Markus Meissner Bolte Patentanwälte Rechtsanwälte Partnerschaft mbB Widenmayerstraße 47 80538 München (DE)**

(56) Entgegenhaltungen:
EP-A1- 1 672 454    DE-A1- 19 826 169
DE-A1-102005 006 410    DE-A1-102008 064 491
DE-A1-102011 079 732    US-A1- 2003 097 243

EP 2 778 412 B1

## Beschreibung

Die Erfindung betrifft ein Verfahren zum Steuern und/oder Überwachen einer Kompressoranlage umfassend ein oder mehrere Kompressoren und ein oder mehrere Peripheriegeräte, wobei die Kompressoren und Peripheriegeräte in einer vorbestimmten Konfiguration angeordnet bzw. verschaltet sind, wobei die Kompressoranlage über eine Steuer-Überwachungseinheit gesteuert und/oder überwacht wird, sowie eine Kompressoranlage nach Anspruch 14.

Kompressoranlagen stellen ein System aus einer Vielzahl von Kompressoren und Peripheriegeräten verschiedener Typen dar, die über ein Luftrohrleitungsnetz und, bei Verwendung von Wärmegewinnungssystemen, über ein Wasserrohrleitungsnetz miteinander gekoppelt sind. Im Allgemeinen werden Kompressoranlagen individuell für die Gegebenheiten vor Ort ausgelegt. Eine allgemeingültige Struktur für Kompressoranlagen existiert nicht. Das Verhalten einer konkreten Kompressoranlage kann daher ohne Kenntnis über die Struktur der Kompressoranlage nur eingeschränkt analysiert und bewertet werden.

Für die Ansteuerung und Diagnose der Kompressoren und Peripheriegeräte in einer Kompressoranlage werden sog. übergeordnete Stationssteuerungen verwendet, die bezüglich ihrer Aufgabe mit Leitsystemen in der Prozesstechnik vergleichbar sind. Der wesentliche Unterschied zu Leitsystemen besteht darin, dass Leitsysteme normalerweise mit einem Steuerungs- und Analyseverfahren arbeiten, das speziell für den zu steuernden Prozess entwickelt wurde. In der Spezialentwicklung ist das Wissen über die Struktur des zu steuernden Prozesses und die Wirkzusammenhänge der Einzelkomponenten des Prozesses kodiert. Bei Stationssteuerungen stellen allerdings speziell für die zu steuernde und zu überwachende Kompressoranlage entwickelte Steuerungs- und Analyseverfahren die Ausnahme dar. Im Normalfall wird ein Standardsteuer- und Analyseverfahren eingesetzt, das lediglich durch Parametrierung auf die Gegebenheiten vor Ort angepasst wird.

Aus der DE 10 2011 079 732 A1 und der DE 10 2008 064 491 A1 ist Verfahren zur Steuerung einer Kompressoranlage bekannt, bei denen die Steuerung anhand eines mathematischen Modells der Kompressoranlage vorgenommen wird. Aus der US 2003/0097243 A1 ist weiterhin ein modellbasiertes System und Verfahren zum Betrieb einer chemischen Produktionsstätte bekannt.

Die Aufgabe der vorliegenden Erfindung besteht demgegenüber darin, ein Verfahren zum Steuern und/oder Überwachen einer Kompressoranlage anzugeben, das die Gegebenheiten einer spezifischen Kompressoranlage noch genauer berücksichtigt. Weiter soll auch eine Kompressoranlage vorgeschlagen werden, die im Hinblick auf die vorstehend geschilderte Problematik verbessert ist.

Diese Aufgabe wird in verfahrenstechnischer Hinsicht mit einem Verfahren zum Steuern und/oder Überwachen einer Kompressoranlage nach den Merkmalen des Anspruchs 1 und in vorrichtungstechnischer Hinsicht mit einer Kompressoranlage nach den Merkmalen des Anspruchs 14 gelöst. Weiterhin wird noch eine Steuer- und Überwachungseinheit zum Steuern und/oder Überwachen einer Kompressoranlage vorgeschlagen.

Ein Kerngedanke der vorliegenden Erfindung besteht darin, dass basierend auf einem oder mehreren Ausgangsmodellen $M_1$, $M_2$, ... der Kompressoranlage, das beispielsweise auf einem R&I-Schema, ggf. inklusive der Spezialisierung der Kompressoren und der Peripheriegeräte beruht, ein oder mehrere abgeleitete Modelle $\tilde{M}_a$, $\tilde{M}_b$, ..., die Wirkzusammenhänge zwischen den einzelnen Kompressoren und Peripheriegeräten und ggf. auf dynamische Prozesse berücksichtigen, erstellt wird und dass das eine oder die mehreren abgeleiteten Modelle $\tilde{M}_a$, $\tilde{M}_b$, ... den nachfolgenden Steuer-, Überwachungs-, Diagnose- oder Auswertroutinen zugrunde gelegt werden.

Im Sinne des vorgeschlagenen Verfahrens kann sich ein abgeleitetes Modell beispielsweise aus genau einem Ausgangsmodell ergeben. Es ist aber auch möglich, dass sich ein abgeleitetes Modell aus zwei oder mehreren Ausgangsmodellen ergibt oder zwei oder mehr abgeleitete Modelle entstehen, die auf einem einzigen Ausgangsmodell beruhen. Schließlich ist es möglich, dass sich zwei oder mehr abgeleitete Modelle aus zwei oder mehr Ausgangsmodellen ergeben.

Bei dem abgeleiteten Modell $\tilde{M}_a$, $\tilde{M}_b$, ... kann es sich um ein Endmodell handeln, das unmittelbar in nachfolgenden Steuer-, Überwachungs-, Diagnose- oder Auswerteroutinen eingesetzt wird bzw. für diese Steuer-, Überwachungs-, Diagnose- oder Auswertroutinen zugrunde gelegt wird; es kann sich aber auch um ein Zwischenmodell handeln, aus dem in ein oder mehreren Schritten das Endmodell entwickelt wird, das letztendlich in nachfolgenden Steuer-, Überwachungs-, Diagnose- oder Auswertroutinen eingesetzt wird bzw. diese Steuer-, Überwachungs-, Diagnose- oder Auswertroutinen zugrunde gelegt wird.

Unter einer Steuer-, Überwachungs-, Diagnose- oder Auswertroutine sollen ganz generell unterschiedliche Steueraufgaben, Überwachungsaufgaben, Diagnoseaufgaben oder Auswertaufgaben verstanden werden.

Sofern davon gesprochen wird, dass die Kompressoren und Peripheriegeräte in einer vorbestimmten Konfiguration angeordnet bzw. verschaltet sind, so soll dies in dem Sinne verstanden werden, dass hiervon auch mehrere wechselnde Zustände, beispielsweise eine durch Umschaltung eines Ventils, eines Schalters erzielbare alternative Konfiguration mit umfasst ist. Eine vorbestimmte Konfiguration ist insofern die Menge aller denkbaren Konfigurationen, die die Kompressoranlage in unterschiedlichen Betriebszuständen einnehmen kann.

Auch soll die Konfiguration in Gestalt eines R&I-Schemas umfassend verstanden werden und insofern die Wirkzusammenhänge der Kompressoren und Peripheriegeräte aus unterschiedlichen Betrachtungswinkeln bzw. in unterschiedlichen Domänen erfassen, wobei für die Verwirklichung der Erfindung die Erfassung der Wirkzusammenhänge in einer Domäne, aus einem Blickwinkel selbstverständlich ausreichend ist. Als mögliche Domäne bzw. mögliche Betrachtungsblickwinkel kommen beispielsweise, aber nicht abschließend, die drucklufttechnischen Wirkzusammenhänge, die in einem R&I-Schema im engeren Sinne, insbesondere einem Druckluft-R&I-Schema wiedergegeben werden können, die wärmerückgewinnungsbezogenen Wirkzusammenhänge, die in einem R&I-Schema im engeren Sinne, insbesondere in einem Wärmerückgewinnungs-R&I-Schema wiedergegeben werden können, die kühlwasserkreislaufbezogenen Wirkzusammenhänge, die in einem R&I-Schema im engeren Sinne, insbesondere in einem Kühlwasserkreislauf-R&I-Schema wiedergegeben werden können, sowie die stromversorgungsbezogenen Wirkzusammenhänge, die in einem elektrischen Schaltplan wiedergegeben werden können, in Betracht. Ein R&I-Schema im Sinne der vorliegenden Erfindung kann sich darüber hinaus abstrahiert auf die grundlegenden Wirkzusammenhänge in Betrachtung aus einer Blickrichtung/aus einer Domäne beschränken und muss insofern nicht sämtliche Details eines möglicherweise ansonsten üblichen R&I-Schemas umfassen. Anstelle des Begriffs R&I-Schema kann insofern auch eine graphische Darstellung der Wirkzusammenhänge in einem bestimmten Blickwinkel/in einer bestimmten Domäne verstanden werden, wie beispielsweise eine graphische Darstellung der drucklufttechnischen Wirkzusammenhänge, eine graphische Darstellung der wärmerückgewinnungsbezogenen Wirkzusammenhänge. Es handelt sich insofern um ein Fließschema, das den Fluss von Energie und/oder Betriebsmitteln und/oder Druckluft zwischen den einzelnen Kompressoren und den einzelnen Peripheriegeräten wiedergibt.

Das abgeleitete Modell ist $\tilde{M}_a, \tilde{M}_b, ...$ ein aspektspezifisches Modell AM, das unter Einsatz eines aspektspezifischen Analysealgorithmus aus dem einen oder mehreren Ausgangsmodellen $M_1, M_2, ...$ oder aus einem oder mehreren Zwischenmodellen $M_1', M_2', AAM_1, AAM_2$ erstellt wird. Unter einem aspektspezifischen Modell soll ein Modell zu verstehen sein, das die Kompressoranlage im Hinblick auf eine konkrete Fragestellung beleuchtet. Denkbare Aspekte, die zu einem aspektspezifischen Modell Anlass geben können, sind beispielsweise, aber nicht abschließend: Luftfeuchtigkeit, Druckverlust, Druckluftqualität, Druckgüte, Druckverhalten, Energieeffizienz, Energieaufnahme, Energiebilanz, Temperaturen, Volumenströme/Massenströme, Kosten, Reservegrad und/oder Zuverlässigkeit.

In einer bevorzugten Ausgestaltung des erfindungsgemäßen Verfahrens ist die Information über das aspektspezifische Verhalten eines Kompressors oder eines Peripheriegerätes in einem oder mehreren im Aspekt-Ausgangsmodell AAM zu berücksichtigenden Komponentenmodell KM und/oder im Analysealgorithmus selbst enthalten.

In den aspektspezifischen Analysealgorithmen ist kodiert, wie die Ausgangsmodelle hinsichtlich eines Aspekts (oder mehrere Aspekte) zu interpretieren sind. Ebenso kann in den aspektspezifischen Analysealgorithmen Wissen über das dynamische Verhalten von Kompressoren und/oder Peripheriegeräten im Hinblick auf den betrachteten Aspekt (die betrachteten Aspekte) enthalten sein. Optional verwendet der aspektspezifische Analysealgorithmus aspektspezifische Komponentenmodelle, um die abgeleiteten Modelle zu erstellen.

In einer bevorzugten Ausgestaltung des erfindungsgemäßen Verfahrens ist vorgesehen, dass für jedes zu erstellende aspektspezifische Modell AM ein zugeordneter Analysealgorithmus vorgesehen ist. Ein Analysealgorithmus ist im Normalfall speziell für eine Fragestellung entwickelt, die mit dem aspektspezifischen Modell beantwortet werden soll. Dabei kann es bei verwandten Fragestellungen der Fall sein, dass der gleiche oder ein nur leicht abgewandelter Analysealgorithmus zur Anwendung gelangen kann. Wie bereits erwähnt, ist allerdings jeder aspektspezifischen Fragestellung bzw. jedem aspektspezifischem Modell ein konkreter Analysealgorithmus zugeordnet.

Auch andere abgeleitete Modelle, insbesondere Zwischenmodelle können aus Analysealgorithmen entwickelt werden, die in Einzelfällen mit den abgeleiteten aspektspezifischen Analysealgorithmen gleich oder ähnlich sind.

In einer bevorzugten Ausgestaltung kann vorgesehen sein, dass das abgeleitete Modell $\tilde{M}_a, \tilde{M}_b, ...$ - egal ob es sich um ein End- oder Zwischenmodell handelt - in der Steuer-/Überwachungseinheit abgespeichert wird bzw. auf Veranlassung der Steuer-/Überwachungseinheit extern abgespeichert wird.

In einer möglichen Weiterbildung kann vorgesehen sein, dass das oder die abgeleiteten Modelle $\tilde{M}_a, \tilde{M}_b, ...$ in einem externen System hergeleitet und/oder gespeichert und/oder angewandt werden. In diesem Falle werden insofern eine oder mehrere Tätigkeiten im Zusammenhang mit den abgeleiteten Modellen $\tilde{M}_a, \tilde{M}_b, ...$ extern und ggf. sogar nicht unter unmittelbarer oder mittelbarer Kontrolle der Steuer-/Überwachungseinheit durchgeführt.

Konkret wäre folgender Ablauf denkbar:

1. Betriebsparameter werden in der Kompressoranlage erfasst und in der Steuer-/Überwachungseinheit gespeichert.

2. Die Auswertung dieser Betriebsparameter findet unter Anwendung entsprechender Modelle auf einem externen Server statt. Dieser ist nicht Bestandteil der Steuer-/Überwachungseinheit und auch nicht Bestandteil der Kompressoranlage.

3. Auch der unter 2. angeführte Verfahrensschritt wird als erfindungsgemäßes Verfahren zum Steuern und/oder Überwachen einer Kompressoranlage verstanden, obwohl er nicht selbst innerhalb der Kompressoranlage durchgeführt wird und obwohl auch die Steuer-/Überwachungseinheit hieran nicht beteiligt ist.

4. Das Ergebnis des oben genannten Überwachungs-/Auswertverfahrens kann beispielsweise sein:

    a) Die Berechnung eines nächsten Wartungstermins
    b) Optimierung von Regelungs- oder Steuerungsparametern (beispielsweise die Berechnung eines verringerten Bedarfsdrucks)

5. Mit den unter 4. genannten Ergebnissen kann anschließend

    a) von einem Kompressoranlagenhersteller oder vom Kompressoranlagen-Betreiber eine (automatische) Wartungsplanung durchgeführt werden, um durch rechtzeitige Wartung die Verfügbarkeit der Kompressoranlage zu erhöhen.
    b) Durch die Umparametrierung (manuell oder automatisch) der Kompressoranlagen-Steuerung auf den berechneten optimalen Bedarfsdruck die Energieeffizienz der Drucklufterzeugung verbessert werden.

In einer bevorzugten Ausgestaltung kann vorgesehen sein, dass das oder die abgeleiteten Modelle $\tilde{M}_a$, $\tilde{M}_b$, ... kontinuierlich oder zyklisch oder ereignisbasiert überprüft und ggf. automatisch angepasst werden. Beispielsweise können sich im Betrieb der Kompressoranlage eine verbesserte Datengrundlage ergeben, so dass diese verbesserte Datengrundlage Anlass für eine Anpassung des oder der abgeleiteten Modelle sein kann.

In einer weiteren fakultativen Ausgestaltung kann vorgesehen sein, dass bei Änderung des oder der Ausgangsmodelle $M_1$, $M_2$, ... oder bei Änderung eines oder mehrerer Komponentenmodelle KM, beispielsweise da bauliche Veränderungen an der Kompressoranlage vorgenommen wurden, auch das oder die abgeleiteten Modelle angepasst werden.

In einer möglichen Ausgestaltung können für die Erstellung eines oder mehrerer abgeleiteter Modelle, sei es als Zwischen- oder Endmodell, unterschiedliche domänespezifischen Ausgangsmodelle Berücksichtigung finden. Als domänespezifische Ausgangsmodelle können insbesondere druckluftspezifische Ausgangsmodelle, stromversorgungsspezifische Ausgangsmodelle, auf den Kühlwasserkreislauf bezogene Ausgangsmodelle oder auf die Wärmerückgewinnung bezogene Ausgangsmodelle angesehen und insofern zwei oder mehr Modelle unterschiedlicher Domänen kombiniert bzw. berücksichtigt werden. Es können auch Interaktionen zwischen den unterschiedlichen Domänen erfasst und abgebildet werden.

In einer möglichen Ausgestaltung der vorliegenden Erfindung wird als ein abgeleitetes Modell ein Zwischenmodell angesehen, das gegenüber dem oder den Ausgangsmodellen auch ein dynamisches Verhalten bzw. unterschiedliche Betriebszustände der Kompressoranlage berücksichtigt.

Ein alternatives oder zusätzliches Zwischenmodell, das - falls zusätzlich - hierarchisch vor oder nach dem vordiskutierten Zwischenmodell stehen kann, besteht darin, dass es gegenüber ein oder mehreren Ausgangsmodellen bzw. gegenüber ein oder mehreren Zwischenmodellen aspektspezifisch angepasst und ggf. vereinfacht ist. Wird beispielsweise in einer Kompressoranlage die Frage untersucht, welcher Kompressor jeweils mit einem nachgeschalteten Trockner verknüpft ist, so spielen dazwischen angeordnete Filter keine Rolle und können in einem Zwischenmodell unter dem Blickwinkel dieser Fragestellung beiseite gelassen werden, so dass ein vereinfachtes Zwischenmodell definiert werden kann.

In einer bevorzugten Ausgestaltung kann vorgesehen sein, dass dem oder den Ausgangsmodellen $M_1$, $M_2$ die konkret gegebene Konfiguration der Kompressoranlage in Gestalt eines R&I-Schemas zugrunde liegt, das insbesondere nach Erstellung der Kompressoranlage über einen Editor eingegeben wird.

Obwohl die Wirkzusammenhänge in einem R&I-Schema graphisch veranschaulicht werden, ist es nicht zwingend notwendig, diese über den Editor in graphischer Form einzugeben bzw. zu verarbeiten, obwohl dies eine mögliche Ausgestaltung der vorliegenden Erfindung darstellt. Es ist vielmehr auch möglich, die Wirkzusammenhänge ganz oder teilweise textlich über den Editor einzugeben. Schließlich sind auch andere Eingabeformen denkbar, beispielsweise eine sprachliche Eingabe oder auch eine Eingabe über den Weg der automatischen Bilderkennung. Der Editor kann insofern auch als eine Eingabe-Schnittstelle aufgefasst werden.

Der Editor und/oder der Speicherabschnitt können auch Bestandteil der Steuer-/Überwachungseinheit sein bzw. dort integriert sein.

Während es prinzipiell bevorzugt wird, die konkret gegebene Konfiguration in Gestalt eines R&I-Schemas erst nach Erstellung der Kompressoranlage einzugeben, ist es aber auch denkbar, diese Eingabe bereits vor Erstellung bzw. während Erstellung der Kompressoranlage vorzunehmen, sofern die konkret gegebene Konfiguration bzw. der konkret gegebene Wirkzusammenhang bereits festliegt.

Voraussetzung für die Erstellung der Ausgangsmodelle ist die Kenntnis über die Wirkzusammenhänge in der Kompressoranlage. Es ist nicht unbedingt notwendig, dass die Kompressoranlage existiert. So können ein oder mehrere Ausgangsmodelle bzw. ein R&I-Schema bzw. mehrere domänespezifische R&I-Schemata bereits bei der Planung einer Kompressoranlage erstellt werden. Es ist auch nicht notwendig, dass die Ausgangsmodelle sofort dann erstellt werden bzw. die R&I-Schemata sofort dann eingegeben werden, wenn die Struktur der Kompressoranlage feststeht. Die Ausgangsmodelle bzw. die R&I-Schemata müssen spätestens dann festgelegt bzw. erstellt werden, wenn die R&I-Schemata bzw. die Ausgangsmodelle verwendet werden sollen.

Es versteht sich von selbst, dass das erfindungsgemäße Verfahren auch wiederholt durchgeführt werden kann, etwa dann, wenn sich an der konkret gegebenen Konfiguration, also im realen Aufbau der Kompressoranlage, etwas geändert hat oder wenn bei der vorherigen Eingabe des R&I-Schemas ein Fehler unterlaufen ist.

Die Steuer-/Überwachungseinheit kann als Einheit ausgebildet sein, die sowohl steuernde als auch überwachende Funktionen oder auch nur steuernde bzw. nur überwachende Funktionen übernimmt.

Eine zweckmäßige Weiterbildung des Verfahrens sieht vor, dass nach Eingabe der konkret gegebenen Konfiguration diese auf Veranlassung der Steuer-/Überwachungseinheit abgespeichert wird.

In einer möglichen, fakultativen Ausgestaltung umfasst die Eingabe des R&I-Schemas ausschließlich die Konfiguration bzw. Verschaltung der der Steuer-/Überwachungseinheit bereits bekannten Kompressoren und Peripheriegeräte. Hierbei kann der Steuer-/Überwachungseinheit einerseits die Existenz eines bestimmten Kompressors bzw. eines bestimmten Peripheriegeräts als solches bereits bekannt sein oder der Steuer-/Überwachungseinheit kann neben der bloßen Existenz bestimmter Kompressoren bzw. bestimmter Peripheriegeräte bereits schon die konkrete Spezifizierung der vorhandenen Kompressoren und Peripheriegeräte bekannt sein. In einer alternativen, ebenfalls fakultativen Ausgestaltung des Verfahrens umfasst die Eingabe des R&I-Schemas neben der Eingabe der Konfiguration bzw. Verschaltung der Kompressoren und Peripheriegeräte auch die konkrete Spezifizierung der vorhandenen Kompressoren und Peripheriegeräte.

In einer besonders bevorzugten Ausgestaltung des Verfahrens wird die Eingabe des R&I-Schemas nutzerseits vorgenommen. Da nutzerseits oft Kompressoren und/oder Peripheriegeräte unterschiedlicher Hersteller miteinander kombiniert werden zur Erstellung einer konkreten Kompressoranlage, ist die Erfassung der Wirkzusammenhänge nutzerseits eine bevorzugte mögliche Ausgestaltung.

In einer möglichen Weiterbildung des erfindungsgemäßen Verfahrens kann vorgesehen sein, dass bei Eingabe des R&I-Schemas vom Editor die Kompressoren und Peripheriegeräte als entsprechend graphische Symbole vorgegeben bzw. auswählbar sind. Ebenso kann in einer möglichen Ausgestaltung vorgesehen sein, dass bei Eingabe des R&I-Schemas vom Editor die Verknüpfungen der Kompressoren und der Peripheriegeräte als entsprechend graphische Symbole vorgegeben bzw. auswählbar sind.

Weiter kann vorgesehen sein, dass bei Eingabe des R&I-Schemas vom Editor verschiedene mögliche Spezifizierungen der Kompressoren und/oder der Peripheriegeräte vorgegeben bzw. auswählbar sind.

In einer möglichen Ausgestaltung kann vorgesehen sein, dass das Vorhandensein einer oder mehrerer Kompressoren sowie einer oder mehrerer Peripheriegeräte und/oder der Spezifizierung einzelner oder aller Kompressoren und/oder einzelner oder aller Peripheriegeräte von extern übermittelt wird, insbesondere durch ein Upload entsprechender Informationen eingegeben wird, beispielsweise als Upload einer vom Anlagenbauer zur Verfügung gestellten Datei.

Eine mögliche Ausgestaltung des Verfahrens sieht ferner vor, dass einzelne oder alle Kompressoren und/oder Peripheriegeräte sich selbständig bei der Steuer-/Überwachungseinheit anmelden und vorzugsweise auch ihre Spezifizierung selbständig übermitteln. Diese Anmeldung bzw. Übermittlung kann leitungsgebunden, insbesondere draht- oder glasfasergebunden oder per Funkwellen erfolgen.

Alternativ zur Eingabe eines R&I-Schemas in die Steuer-/Überwachungseinheit durch einen Editor kann das Wissen über die Wirkzusammenhänge auch auf anderen Wegen in die Steuer-/Überwachungseinheit gelangen:

- Import einer Beschreibung/eines Modells in die Steuer-/Überwachungseinheit
- Automatische Detektion und ggf. Erfassung der Spezifizierung einzelner oder aller Kompressoren bzw. einzelner oder aller Peripheriegeräte einer Kompressoranlage. Denkbar ist beispielsweise, dass die Steuer-/Überwachungseinheit durch entsprechende Kommunikation die Kompressoren und/oder Peripheriegeräte nach deren Eigenschaften abfrägt. Alternativ melden sich die Kompressoren und/oder Peripheriegeräte bei der Steuer-/Überwachungseinheit vorzugsweise unter Angabe ihrer Spezifikationen an.
- Schließlich käme auch eine automatische Detektion von Teilen der Kompressoranlage, beispielsweise durch Betriebsparameteranalyse und/oder durch bildliche Erkennungssysteme in Betracht. Dies kann auf die folgende Teildetektion gerichtet sein:

  - Detektion der Verschaltung von Kompressoren und/oder Peripheriegeräten
  - Detektion von Kompressoren und/oder Peripheriegeräten
  - Tuning von Modellparametern

In einer möglichen konkreten Ausgestaltung des erfindungsgemäßen Verfahrens kann die Auswahl graphischer Symbole zur Repräsentation von Kompressoren oder von Peripheriegeräten und/oder die Auswahl konkreter Spezifizierungen und/oder die Auswahl spezieller Verknüpfungen durch Markierung in einer Vorschlagsliste erfolgen, wobei das ausgewählte Objekt bzw. die ausgewählte Information anschließend in das im Editor zu erstellende R&I-Schema übertragbar ist. Hierbei handelt es sich aber um eine sehr konkrete, mögliche Ausgestaltung. Zahlreiche andere Abwandlungen sind denkbar, insbesondere im Zusammenhang mit einer teilweise oder ausschließlichen textlichen Eingabe, einer Eingabe per Spracherkennung oder eine Eingabe per Bilderkennung.

Wie bereits erwähnt, kann es erfindungsgemäß vorgesehen sein, dass nur für eine Domäne/einen Blickwinkel ein Wirkzusammenhang bzw. eine Konfiguration in Gestalt eines R&I-Schemas eingegeben wird. In einer möglichen Ausgestaltung werden für zwei oder mehr unterschiedliche Domänen/Blickwinkel jeweilige R&I-Schemata bzw. jeweilige Konfigurationen bzw. Wirkzusammenhänge eingegeben, beispielsweise ein

- Druckluft-R&I-Schema
- und/oder ein Wärmerückgewinnungs-R&I-Schema
- und/oder ein kühlkreislaufbezogenes R&I-Schema
- und/oder ein stromversorgungsbezogener Wirkzusammenhang, insbesondere ein elektrischer Schaltplan.

Ganz generell wird darauf hingewiesen, dass die Steuer-/Überwachungseinheit in einem oder in mehreren miteinander in Wirkverbindung stehenden Servern oder in einem virtuellen Rechner implementiert sein kann.

Wird dieser Weg eingeschlagen, d.h. ein aspektspezifisches Ausgangsmodell definiert, so lässt sich bevorzugtermaßen unter Einsatz eines aspektspezifischen Analysealgorithmus ein aspektspezifisches Modell erstellen, im gewählten Beispiel kann also aus dem aspektspezifischen Ausgangsmodell AAM, bei dem beispielsweise die Filter als in der konkreten Fragestellung nicht zu berücksichtigende Peripheriegeräte beiseite gelassen wurden, unter einem geeigneten Analysealgorithmus die Fragestellung beantworten, welcher Trockner durch welchen Kompressor beliefert werden kann.

In einer möglicherweise alternativen oder zusätzlichen Ausgestaltung des erfindungsgemäßen Verfahrens wird ein Verfahren zum Überwachen einer Kompressoranlage umfassend ein oder mehrere Kompressoren und ein oder mehrere Peripheriegeräte vorgeschlagen, wobei die Kompressoren und Peripheriegeräte in einer vorbestimmten Konfiguration angeordnet bzw. verschaltet sind, wobei die Kompressoranlage über eine Steuer-/Überwachungseinheit gesteuert und/oder überwacht wird, wobei das Verfahren eine Prognose für den nächsten Wartungstermin der Kompressoranlage oder einzelner Kompressoren oder einzelner Peripheriegeräte erstellt, insbesondere nach Anspruch 1, dadurch gekennzeichnet,

- dass, insbesondere nach Erstellung der Kompressoranlage, die konkret gegebene Konfiguration in Gestalt eines R&I-Schemas über einen Editor (23) eingegeben wird und diese Eingabe die Grundlage für ein oder mehrere Ausgangsmodelle bildet,
- dass basierend auf diesen Ausgangsmodellen ($M_1$, $M_2$, ...) ein oder mehrere abgeleitete Modelle ($\tilde{M}_a$, $\tilde{M}_b$, ...), die Wirkzusammenhänge zwischen den einzelnen Kompressoren (11, 12, 13) und der Peripheriegeräten (14 bis 21), ggf. auch dynamische Prozesse berücksichtigen, erstellt werden, und
- unter Berücksichtigung standardisierter Betriebsdaten der Kompressoranlage unter Verwendung des oder der abgeleiteten Modelle ($\tilde{M}_a$, $\tilde{M}_b$, ...) eine Prognose für den nächsten Wartungstermin erstellt wird.

In einer möglicherweise alternativen oder zusätzlichen Ausgestaltung des erfindungsgemäßen Verfahrens wird weiterhin ein Verfahren zum Überwachen einer Kompressoranlage umfassend ein oder mehrere Kompressoren und ein oder mehrere Peripheriegeräte vorgeschlagen, wobei die Kompressoren und Peripheriegeräte in einer vorbestimmten Konfiguration angeordnet bzw. verschaltet sind, wobei die Kompressoranlage über eine Steuer-/Überwachungseinheit gesteuert und/oder überwacht wird, wobei das Verfahren als Diagnoseverfahren zur Diagnose der Kompressoranlage oder einzelner Kompressoren oder einzelner Peripheriegeräte ausgestaltet, insbesondere nach Anspruch 1, dadurch gekennzeichnet,

- dass, insbesondere nach Erstellung der Kompressoranlage, die konkret gegebene Konfiguration in Gestalt eines R&I-Schemas über einen Editor (23) eingegeben wird und diese Eingabe die Grundlage für ein oder mehrere Ausgangsmodelle bildet,
- dass basierend auf diesen Ausgangsmodellen ($M_1$, $M_2$, ...) ein oder mehrere abgeleitete Modelle ($\tilde{M}_a$, $\tilde{M}_b$, ...), die Wirkzusammenhänge zwischen den einzelnen Kompressoren (11, 12, 13) und der Peripheriegeräten (14 bis 21), ggf. auch dynamische Prozesse berücksichtigen, erstellt werden, und
- unter Berücksichtigung standardisierter Betriebsdaten der Kompressoranlage unter Verwendung des oder der abgeleiteten Modelle ($\tilde{M}_a$, $\tilde{M}_b$, ...) eine Fehlerdiagnose durchgeführt wird.

Erfindungsgemäß wird weiterhin auch eine Kompressoranlage umfassend ein oder mehrere Kompressoren sowie ein oder mehrere Peripheriegeräte sowie eine Steuer-/Überwachungseinheit beansprucht, wobei die Kompressoren und Peripheriegeräte in einer vorbestimmten Konfiguration angeordnet bzw. verschaltet sind, wobei die Kompressoranlage über eine Steuer-/Überwachungseinheit gesteuert und/oder überwacht wird, die sich dadurch auszeichnet, dass die Steuer-/Überwachungseinheit derart ausgebildet und eingerichtet ist, dass sie bei Steuer-, Überwachungs-, Diagnose- oder Auswertroutinen auf ein oder mehrere abgeleitete Modelle $\tilde{M}_a$, , ... der Kompressoranlage zurück-

greift, das oder die basierend auf einem oder mehreren Ausgangsmodellen $M_1$, $M_2$, ... der Kompressoranlage erstellt werden, aber auch Wirkzusammenhänge zwischen den einzelnen Kompressoren und der Peripheriegeräte sowie ggf. auch dynamische Prozesse berücksichtigen, wobei das eine oder die mehreren abgeleiteten Modelle $\tilde{M}_a$, $\tilde{M}_b$, ... jeweils aspektspezifische Modelle AM sind, die unter Einsatz eines aspektspezifischen Analysealgorithmus aus dem einen oder mehreren Ausgangsmodellen M1, M2, ... oder aus dem einen oder mehreren Ausgangsmodellen M1, M2, ... über ein oder mehrere Zwischenmodelle M1', M2', ..., AAM1, AAM2, ... erstellt werden.

In einer möglichen Weiterbildung der Kompressoranlage kann vorgesehen sein, dass die Steuer-/Überwachungseinheit für die Abspeicherung des oder der abgeleiteten Modelle $\tilde{M}_a$, $\tilde{M}_b$, ... Sorge trägt.

In einer weiteren möglichen Ausgestaltung kann die Steuer-/Überwachungseinheit derart ausgebildet sein, dass sie in einem oder mehreren miteinander in Wirkverbindung stehenden Servern oder in einem virtuellen Rechner implementiert ist.

Schließlich kann in einer möglichen Ausgestaltung auch noch vorgesehen sein, dass die Steuer-/Überwachungseinheit auch einen Editor umfasst und der Editor zur Eingabe der konkret gegebenen Konfiguration der Kompressoranlage in Gestalt eines R&I-Schemas ausgebildet und bestimmt ist und der Editor weiterhin mit der Steuer-/Überwachungseinheit in Wirkverbindung steht derart, dass das eingegebene R&I-Schema an die Steuer-/Überwachungseinheit übertragen wird und es dort als Ausgangsgrundlage zur Erstellung eines oder mehrerer Ausgangsmodelle $M_1$, $M_2$, ... dient.

Schließlich wird noch eine Steuer-/Überwachungseinheit zum Steuern und/oder Überwachen einer Kompressoranlage umfassend ein oder mehrere Kompressoren und ein oder mehrere Peripheriegeräte vorgeschlagen, wobei die Kompressoren und Peripheriegeräte in einer vorbestimmten Konfiguration angeordnet bzw. verschaltet sind und die Steuer-/Überwachungseinheit die Steuerung und/oder Überwachung der Kompressorenanlage bewirkt, dadurch gekennzeichnet, dass das basierend auf einem oder mehreren Ausgangsmodellen $M_1$, $M_2$, ... der Kompressoranlage, das beispielsweise auf einem R&I-Schema, ggf. inklusive der Spezifizierung der Kompressoren und der Peripheriegeräte beruht, ein oder mehrere abgeleitete Modelle das Wirkzusammenhänge zwischen den einzelnen Kompressoren und Peripheriegeräten und ggf. auch dynamische Prozesse berücksichtigt, erstellt wird, wobei das eine oder die mehreren abgeleiteten Modelle $\tilde{M}_a$, $\tilde{M}_b$, ... jeweils aspektspezifische Modelle AM sind, die unter Einsatz eines aspektspezifischen Analysealgorithmus aus dem einen oder mehreren Ausgangsmodellen M1, M2, ... oder aus dem einen oder mehreren Ausgangsmodellen M1, M2, ... über ein oder mehrere Zwischenmodelle M1', M2', ..., AAM1, AAM2, ... erstellt werden, und dass das eine oder die mehreren abgeleiteten Modelle $\tilde{M}_a$, $\tilde{M}_b$, ... in nachfolgenden Steuer-, Überwachungs-, Diagnose- oder Auswertroutinen zugrunde gelegt werden.

Vorzugsweise kann die Kompressoranlage noch einen Editor umfassend, der zur Eingabe der konkret gegebenen Konfiguration in Gestalt eines R&I-Schemas ausgebildet und bestimmt ist und der mit der Steuer-/Überwachungseinheit in Wirkverbindung steht derart, dass das eingegebene R&I-Schema an die Steuer-/Überwachungseinheit übertragen wird, um es nachfolgenden Steuer-, Überwachungs-, Diagnose- oder Auswertroutinen zugrunde zu legen.

In einer konkreten Weiterbildung kann vorgesehen sein, dass die Steuer-/Überwachungseinheit für die Abspeicherung des oder der eingegebenen R&I-Schemata Sorge trägt. Weiter kann in einer möglichen Ausgestaltung vorgesehen sein, dass in der Steuer-/Überwachungseinheit Spezifizierungen der in der Kompressoranlage eingesetzten Kompressoren oder Peripheriegeräte gespeichert sind derart, dass die Eingabe des R&I-Schemas ausschließlich die Konfiguration bzw. Verschaltung der Kompressoren und Peripheriegeräte umfasst. Alternativ kann aber auch vorgesehen sein, wie schon anhand des Verfahrens beschrieben, dass bei Eingabe des R&I-Schemas nicht nur die Konfiguration bzw. Verschaltung der Kompressoren und Peripheriegeräte, sondern auch zunächst überhaupt das Vorhandensein eines oder mehrerer Kompressoren sowie eines oder mehrerer Peripheriegeräte festgelegt wird und/oder vorzugsweise auch Spezifizierungen wenigstens eines Teils der Kompressoren oder Peripheriegeräte eingegeben werden.

In einer möglichen Ausgestaltung kann vorgesehen sein, dass die Steuer-/Überwachungseinheit in einem Speicherabschnitt Listen von Spezifizierungen möglicher Kompressoren oder von Peripheriegeräten und/oder graphischer Symbole zur Repräsentation eingesetzter Kompressoren bzw. eingesetzter Peripheriegeräte und/oder graphische Symbole zur Repräsentation möglicher Verknüpfungen zur Auswahl unter Stellung eines R&I-Schemas im Editor bereithält. Die Auswahl der entsprechenden Informationen bzw. graphischen Symbole kann über verschiedene mögliche Eingabemöglichkeiten erfolgen, wie etwa cursor- bzw. mausgesteuert, textgesteuert, sprachgesteuert, etc. In gleicher Weise kann die Erstellung des R&I-Schemas im Editor anhand der ausgewählten Symbole und/oder Informationen erfolgen.

Es versteht sich von selbst, dass die hinsichtlich des erfindungsgemäßen Verfahrens angesprochenen Aspekte, vorteilhaften Ausgestaltungen und Vorteile entsprechend angepasst auch auf die Kompressoranlage und die Steuer-/Überwachungseinheit übertragbar sind.

Die Erfindung wird nachstehend auch hinsichtlich weiterer Merkmale und Vorteile anhand verschiedener Ausführungsbeispiele und unter Bezugnahme auf die nachstehenden Figuren näher erläutert. Hierbei zeigen:

Figur 1      eine rein beispielhafte Konfiguration einer realen Kompressoranlage, die mit einer erfindungsgemäßen Steuer-/Überwachungseinheit zusammenwirkt.

Figur 2     eine Modellierung der Kompressoranlage nach Figur 1 nach dem Stand der Technik.

Figur 3     ein Ausgangsmodell, das die Kompressoranlage in ihrer konkret gegebenen Konfiguration in Gestalt eines R&I-Schemas darstellt.

Figur 4     ein vom R&I-Schema nach Figur 3 als Ausgangsmodell abgeleitetes Modell M', das unterschiedliche Betriebszustände berücksichtigt.

Figur 5     ein aus dem R&I-Schema nach Figur 3 als Ausgangsmodell abgeleitetes Modell, das als vereinfachtes aspektspezifisches Ausgangsmodell AAM angesehen werden kann.

Figur 6     ein aspektspezifisches Modell AM, das aus dem aspektspezifischen Ausgangsmodell AAM nach Figur 5 entwickelt wurde.

Figur 7     eine Übersicht über die möglichen Pfade zur Entwicklung eines aspektspezifischen Modells bzw. eines aspektspezifischen Endmodells aus einem Ausgangsmodell.

Figur 8     eine schematische Übersicht über die einzelnen Verfahrensschritte und die daraus erzielbaren Vorteile veranschaulicht, wenn einerseits die Wirkzusammenhänge zwischen den Kompressoren und Peripheriegeräten einer Kompressoranlage in Gestalt eines R&I-Schemas als Grundlage für ein oder mehrere Ausgangsmodelle Berücksichtigung finden und andererseits abgeleitete Modelle aus diesen Ausgangsmodellen entwickelt werden.

Figur 9     ein Beispiel für eine Optimierungsroutine, bei der der Bedarfsdruck $p_{Bedarf}$ einer Kompressoranlage unter Verwendung von Modellen optimiert wird.

Figur 10    ein Beispiel zur Veranschaulichung, wie unter Anwendung eines quantitativen Modells einer Kompressoranlage sich das wirksame Puffervolumen einer Kompressoranlage bestimmen lässt.

Figur 11    ein aus dem Aufbau nach Figur 10 abgeleitetes aspektspezifisches Ausgangsmodell AAM.

Figur 12    Veranschaulichung der Änderung des Druckgradienten zum Zeitpunkt des Schaltens eines Kompressors.

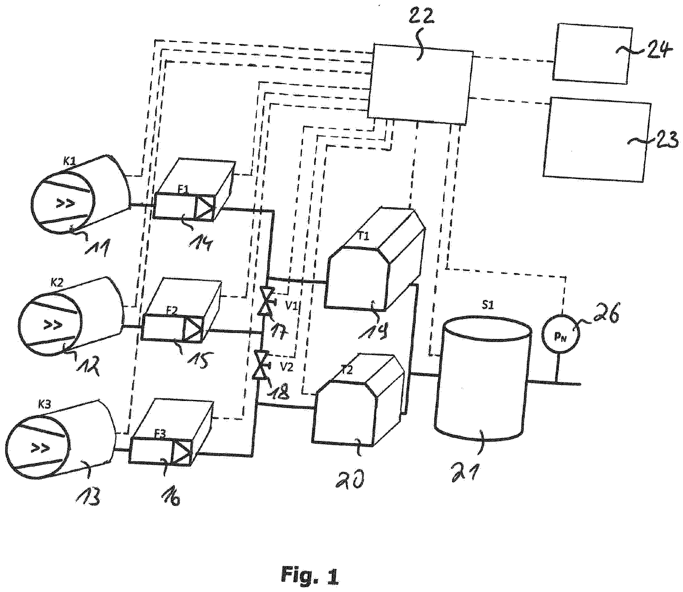

In Figur 1 ist ein beispielhafter Aufbau einer real gegebenen Kompressoranlage veranschaulicht. Die beispielhafte Kompressoranlage soll drei seriell zueinander angeordnete Kompressoren 11, 12, 13 umfassen. Jedem Kompressor 11, 12, 13 kann eindeutig ein Filter 14, 15, 16 zugeordnet werden, der jeweils stromabwärts des zugeordneten Kompressors 11, 12, 13 angeordnet ist. Stromabwärts der Filter 14, 15, 16 sind zwei Trockner 19, 20 angeordnet. Die Druckluft stromabwärts des ersten Filters 14 soll immer über den ersten Trockner 19 strömen. Die Druckluft stromabwärts des zweiten Filters 15 kann über zwei Ventile 17, 18 entweder über den ersten Trockner 19 oder über den zweiten Trockner 20 geleitet werden. Die beiden Ventile 17, 18 sind derart ausgestaltet bzw. angesteuert, dass sie niemals gleichzeitig geöffnet sind, also bei Öffnung des ersten Ventils 17 das zweite Ventil 18 geschlossen bleibt bzw. bei Öffnung des zweiten Ventils 18 das erste Ventil 17 geschlossen bleibt.

Stromabwärts der beiden Trockner 19, 20 ist ein Druckluftspeicher 21 angeordnet. Abstromseitig des Druckluftspeichers 21 ist noch ein Drucksensor 26 angeordnet zur Erfassung des dort gegebenen Betriebsdrucks.

Zum Steuern und/oder Überwachen der Kompressoranlage ist eine Steuer-/Überwachungseinheit 22 vorgesehen, die mit den Kompressoren 11, 12, 13 sowie den Filtern 14, 15, 16, den Ventilen 17, 18, den Trockner 19, 20, dem Druckluftspeicher 21 sowie dem Drucksensor 26 in Wirkverbindung steht. Die Filter 14, 15, 16, die Ventile 17, 18, die Trockner 19, 20, der Druckluftspeicher 21 sowie der Drucksensor 26 bilden hierbei Peripheriegeräte der Kompressoranlage. Die Steuer-/ Überwachungseinheit 22 steht weiterhin noch mit einem Speicherabschnitt 24 sowie einem Editor 23 in Wirkverbindung. Die Steuer-/Überwachungseinheit 22 kann dabei Steuerfunktionen, Überwachungsfunktionen oder Steuer- und Überwachungsfunktionen erfüllen. Unter Überwachung soll vorliegend jegliche Form der Auswertung verstanden werden, also neben einer Überwachung auf Fehlfunktionen, unübliche Betriebszustände, Alarmsituationen, etc. auch eine Diagnose, insbesondere bei einer bereits vorliegenden Fehlermeldung, eine Auswertung im Hinblick auf eine Optimierung oder eine Auswertung zur Prognose eines nächsten Wartungstermins (predictive maintenance).

Um eine oder mehrere dieser Funktionen zu erfüllen, sind Modelle über die Wirkzusammenhänge der Kompressoren 11, 12, 13 sowie der Peripheriegeräte 14 bis 21 zu erfassen und der Steuer-/Überwachungseinheit 22 zugänglich zu machen. Hierzu wird bevorzugtermaßen einerseits die konkret gegebene Konfiguration in Gestalt eines R&I-Schemas über einen Editor 23 eingegeben, der mit der Steuer-/ Überwachungseinheit 22 in Wirkverbindung steht. Andererseits werden von der Steuer-/Überwachungseinheit 22 bzw. extern aus dieser eingegebenen Konfiguration, die den Wirkzusammenhang zwischen den Kompressoren 11, 12, 13 und dem Peripheriegerät 14 bis 21 kodiert, ein oder mehrere Ausgangsmodelle $M_1$, $M_2$, ... erstellt und basierend auf diesen Ausgangsmodellen $M_1$, $M_2$, ... ein oder mehrere abgeleitete Modelle $\tilde{M}_a$, $\tilde{M}_b$, ..., die Wirkzusammenhänge zwischen den einzelnen Kompressoren 11, 12, 13 und Peripheriegeräten 14 bis 21 berücksichtigen, entwickelt.

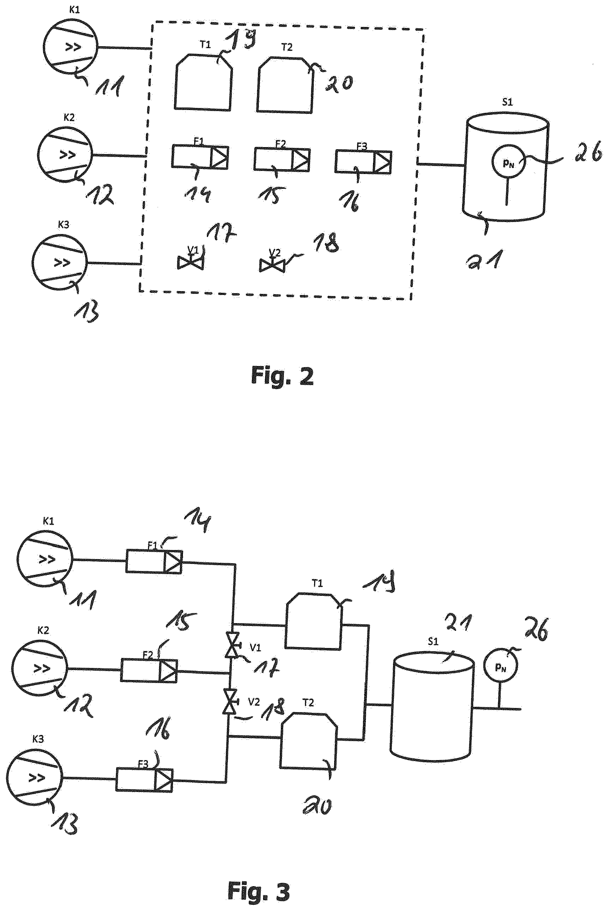

In Abgrenzung hierzu wurde im Stand der Technik, wie anhand von Figur 2 veranschaulicht, der Wirkzusammenhang zwischen den einzelnen Kompressoren 11, 12, 13 und den Peripheriegeräten 14 bis 21, im vorliegenden Beispiel konkret der Filter 14, 15, 16, der Trockner 19, 20 sowie der Ventile 17, 18 und dem Druckluftspeicher 21, nicht berücksichtigt. Bei Verfahren zum Steuern und/oder Überwachen einer Kompressoranlage nach dem Stand der Technik sind die Peripheriegeräte der Druckluftaufbereitung sowie die Verschaltung dieser Peripheriegeräte aus struktureller Sicht nichts anderes als eine Black-Box, was die Kompressoranlage insofern nicht zutreffend abbildet.

Die vorliegende Erfindung sieht daher vor, dass zur Erstellung eines Modells der Kompressoranlage, insbesondere nach Erstellung der Kompressoranlage, die konkret gegebene Konfiguration in Gestalt eines R&I-Schemas über den bereits erwähnten Editor 23 eingegeben wird. Ein für die Kompressoranlage nach Figur 1 repräsentatives R&I-Schema ist in Figur 3 wiedergegeben. Zu berücksichtigen ist, dass für die Eingabe dieses R&I-Schemas viele Varianten denkbar sind. Die Eingabe des R&I-Schemas soll mindestens den Schritt der Festlegung der Wirkzusammenhänge zwischen den Kompressoren 11, 12, 13 und den Peripheriegeräten 14 bis 21 umfassen, kann vorzugsweise aber auch einen Vorschritt, nämlich die Erfassung des Vorhandenseins der Kompressoren 11, 12, 13 und der einzelnen Peripheriegeräte 14 bis 21 umfassen, vorzugsweise auch noch einen weiteren dritten Schritt, nämlich die Eingabe der Spezifizierungen der Kompressoren 11, 12, 13 sowie der Peripheriegeräte 14 bis 21. Es ist denkbar, dass die Erfassung des Vorhandenseins, der Wirkzusammenhänge und der Spezifizierungen auf unterschiedlichem Wege erfolgen, beispielsweise die Wirkzusammenhänge graphisch über den Editor 23 eingegeben werden, die anderen Informationen der Steuer-/Überwachungseinheit 22 anderweitig übermittelt werden, beispielsweise durch Upload einer z.B. vom Anlagenbauer zur Verfügung gestellten Datei. Auch für die Eingabe über den Editor 23 sind unterschiedlichste Varianten denkbar, wie dies im einleitenden Teil der Beschreibung bereits erläutert wurde.

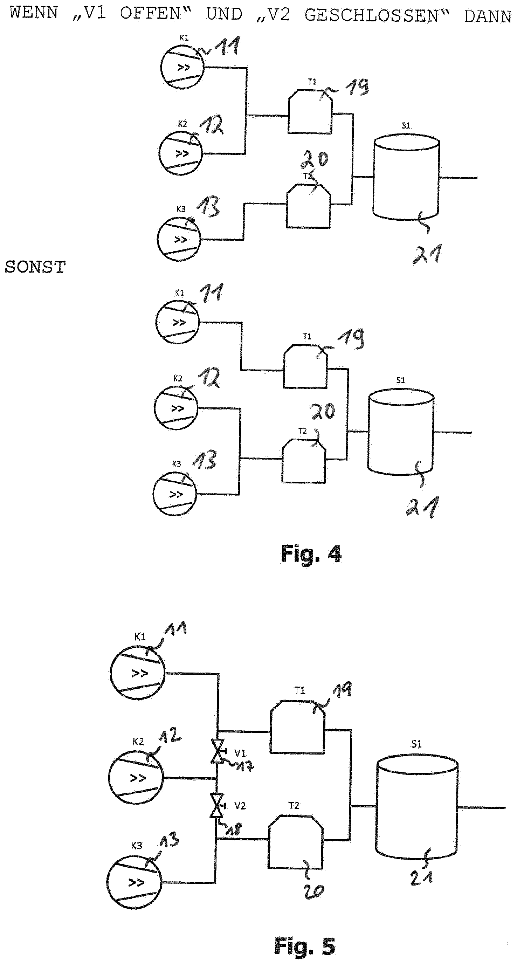

In Figur 4 ist ein abgeleitetes Modell M' veranschaulicht, das bereits unterschiedliche mögliche Betriebszustände des als R&I-Schema gegebenen Ausgangsmodells nach Figur 3 abbildet und berücksichtigt. Während in dem Modell nach Figur 3 die Information darüber, welcher Trockner 19, 20 von welchem Kompressor 11, 12, 13 beliefert wird, noch nicht enthalten ist, berücksichtigt das in Figur 4 veranschaulichte Modell M' die unterschiedlichen Gegebenheiten, indem es die Fallunterscheidung trifft, "*wenn erstes Ventil 17 und zweites Ventil 18 geschlossen, dann ..., ansonsten ...*". V1 bezeichnet dabei das erste Ventil 17, V2 das zweite Ventil 18. T1 bezeichnet den ersten Trockner 19, T2 den zweiten Trockner 20, K1 bezeichnet den ersten Kompressor 11, K2 den zweiten Kompressor 12 sowie K13 den dritten Kompressor 13.

In Figur 5 ist ein aus dem R&I-Schema nach Figur 3 als Ausgangsmodell abgeleitetes Modell veranschaulicht, das als vereinfachtes aspektspezifisches Ausgangsmodell AAM angesehen werden kann. Wird innerhalb der Domäne Druckluft beispielsweise der Aspekt untersucht, welcher Trockner 19, 20 durch welchen Kompressor 11, 12, 13 beliefert werden kann, um hieraus ein aspektspezifisches Modell AM, das diese Fragestellung beleuchtet, zu entwickeln, wird auf einen zugeordneten Analysealgorithmus und ggf. auf Komponentenmodelle zurückgegriffen. Der zugeordnete Analysealgorithmus kann an einer entsprechenden Stelle abgelegt sein, insbesondere im Zugriffsbereich der Steuer- und Überwachungseinheit 22 abgelegt sein. Aspektspezifische Komponentenmodelle können beispielsweise in einer Datenbank integriert sein.

Im vorliegenden Beispielsfall ist dem Analysealgorithmus bekannt, dass für die Fragestellung, welcher Trockner 19, 20 durch welchen Kompressor 11, 12, 13 beliefert wird, die im Ausgangsmodell nach Figur 3 noch vorhandene Filter 14, 15, 16 unberücksichtigt bleiben können. Es ergibt sich insofern für die Fragestellung das in Figur 5 dargestellte aspektspezifische Ausgangsmodell AAM, das gegenüber dem Ausgangsmodell nach Figur 3 dahingehend vereinfacht ist, dass die Filter 14, 15, 16 außer Betracht bleiben.

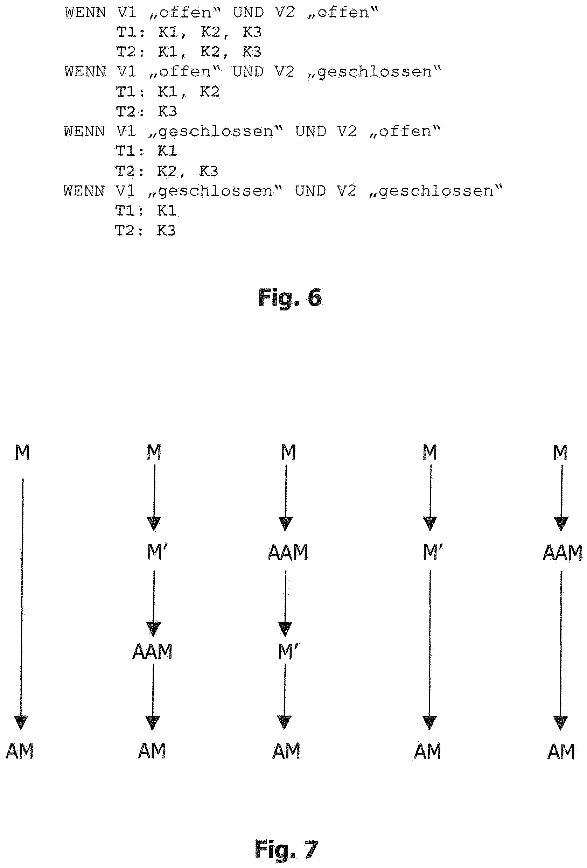

In Figur 6 ist nun das aspektspezifische Modell AM dargestellt, das sich aus dem aspektspezifischen Ausgangsmodell nach Figur 5 für die Fragestellung ergibt, welche der Trockner 19, 20 durch welchen Kompressor 11, 12, 13 beliefert wird. Insofern wurde dem aspektspezifischen Modell nach Figur 6 das aspektspezifische Ausgangsmodell AAM herangezogen, das als Zwischenmodell angesehen werden kann und auf dem Ausgangsmodell M nach Figur 3 beruht.

In Figur 7 sind verschiedene Pfade zur Entwicklung eines aspektspezifischen Modells AM (bzw. eines aspektspezifischen Endmodells) aus einem Ausgangsmodell M dargestellt. Insofern ist es denkbar, ein oder mehrere aspektspezifische Modelle AM direkt aus ein oder mehreren Ausgangsmodellen M zu entwickeln. Es ist aber auch denkbar, ein oder mehrere aspektspezifische Modelle AM über Zwischenmodelle aus ein oder mehreren Ausgangsmodellen M zu entwickeln. Als Zwischenmodelle kommen entweder Modelle M' oder Modelle AAM in Betracht, wobei die Modelle M' generalisierend für eine Domäne/einen Blickwinkel ein (oder ggf. mehrere) Modelle definieren, die beispielsweise unterschiedliche Betriebszustände eines oder mehrerer Ausgangsmodelle definieren. Aspektspezifische Ausgangsmodelle AAM bilden die Grundlage, um unter Zuhilfenahme eines Analysealgorithmus und/oder unter Berücksichtigung von Komponentenmodellen zu einem aspektspezifischen Modell AM zu gelangen. Insofern ist es denkbar, über den Pfad M, M', AAM zum aspektspezifischen Modell AM zu gelangen. Alternativ ist es aber auch möglich, ausgehend vom Ausgangsmodell M über AAM und anschließend M' zum Ausgangsmodell AM zu gelangen. Schließlich ist es weiterhin möglich, ausgehend vom Ausgangsmodell M über M' zum aspektspezifischen Modell AM zu gelangen. Das Beispiel in Figur 6 hat gezeigt, dass es ebenfalls möglich ist, ausgehend vom Ausgangsmodell M über AAM zum aspektspezifischen Modell AM zu gelangen. Bei sämtlichen Modellen M', AAM, AM handelt es sich um abgeleitete Modelle $\tilde{M}$, die aus einem Ausgangsmodell M entwickelt werden. Allerdings kann das aspektspezifische Modell AM als Endmodell angesehen werden, das für die Beantwortung konkreter Fragestellungen geeignet ist und insofern in nachstehenden Steuer-, Überwachungs-, Diagnose- oder Auswertroutinen Berücksichtigung finden kann.

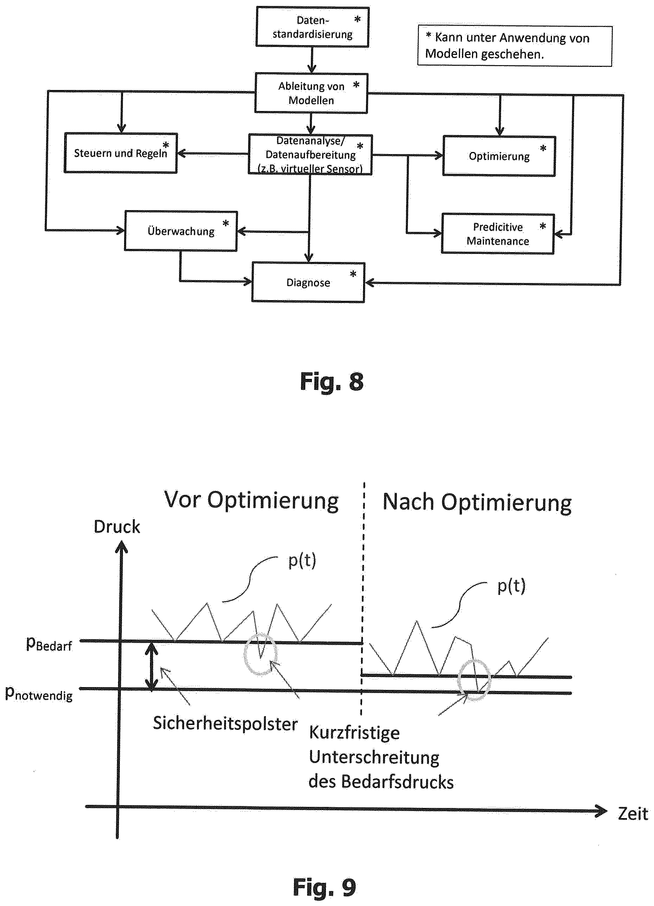

In Figur 8 ist eine schematische Übersicht über die einzelnen Verfahrensschritte und die daraus erzielbaren Vorteile veranschaulicht, wenn einerseits die Wirkzusammenhänge zwischen den Kompressoren und Peripheriegeräten einer Kompressoranlage in Gestalt eines R&I-Schemas als Grundlage für ein oder mehrere Ausgangsmodelle Berücksichtigung finden und andererseits abgeleitete Modelle aus diesen Ausgangsmodellen entwickelt werden.

Insofern sind in Figur 8 die Zusammenhänge der einzelnen Anwendungen von Modellen veranschaulicht. Die in der Abbildung dargestellten Kausalzusammenhänge sind sowohl kumulativ als auch alternativ zu lesen. Grundlage für die Verarbeitung von Daten ist die Standardisierung der Daten in dem Sinne, dass man jedem einzelnen Datum eine wohl definierte Bedeutung zuordnet.

Auf Basis von standardisierten Daten und den domänespezifischen Ausgangsmodellen $M_1$, $M_2$, ... lassen sich wiederum aspektspezifische Modelle AM ableiten, die für zahlreiche weitere Anwendungen herangezogen werden können. Konkret denkbare Anwendungen sind beispielsweise Steuern und Regeln, Optimierung der Randbedingungen, unter denen eine konkrete Kompressoranlage betrieben wird, Datenanalyse, Überwachung, Diagnose, Prognose eines Wartungstermins (predictive maintenance). Hinsichtlich der Anwendung Steuern und Regeln lässt sich festhalten, dass der Betrieb einer Kompressoranlage dadurch verbessert werden kann, dass mithilfe von Modellen Stellhandlungen für die Kompressoren und/oder Peripheriegeräte bei gegebenen Randbedingungen (z.B. einzuhaltender Bedarfsdruck) der Kompressoranlage ermittelt und umgesetzt werden können. Es handelt sich hierbei um eine Optimierung, die in Echtzeit Anwendung findet (Online-Anwendung).

Für das Steuern oder Regeln einer Kompressoranlage sollen nachfolgend noch Beispiele angegeben werden, wie sich aspektbezogen unter Verwendung von Modellen und ggf. abgeleiteten Modellen eine Verbesserung des Betriebsablaufs einer Kompressoranlage erreichen lässt:

a) Aspekt Energieeffizienz:
Beispielsweise kann unter Berücksichtigung der Wirkzusammenhänge der Kompressoranlage, also des entsprechenden R&I-Schemas und ggf. Berücksichtigung weiterer abgeleiteter Modelle erreicht werden, dass Trockner einer Kompressoranlage nur dann betrieben werden, wenn der Bedarf für die Trocknung von Druckluft besteht. In Zeiträumen, in denen der Bedarf für die Trocknung von Druckluft nicht besteht, werden Trockner nicht betrieben und damit Energie für die Deckung "thermischer Leckagen" eingespart.
b) Aspekt Druckluftqualität:
Hier kann bei Kenntnis über die Wirkzusammenhänge zwischen den Kompressoren und Peripheriegeräten einer Kompressoranlage die Reaktion auf den Ausfall eines Trockners wie folgt geregelt werden: Fällt ein Trockner aus, werden die dem Trockner zugeordneten Kompressoren nur noch dann betrieben, wenn die Liefermenge der anderen Kompressoren für die Deckung des Druckluftbedarfs nicht ausreicht. Sofern durch die Druckluftverrohrung möglich, wird die Druckluft der dem ausgefallenen Trockner zugeordneten Kompressoren auf andere Trockner verteilt.

Als ein Beispiel für die Datenanalyse unter Verwendung von Modellen im Sinne der vorliegenden Erfindung können aspektspezifische Modelle erzeugt werden. Grundsätzlich können für die meisten denkbaren Anwendungen, nicht nur bei der Datenanalyse, sondern auch bei der Überwachung, Diagnose, etc. quantitative oder qualitative Aussagen in Betracht kommen. Für den Aspekt der Zuverlässigkeit der Kompressoranlage kann beispielsweise eine quantitative Aussage im Sinne einer Mean-Time-To-Failure-Quantifizierung getroffen werden, beispielsweise 10.000 Stunden. Eine die Zuverlässigkeit der Kompressoranlage beleuchtende Aussage kann aber auch qualitativ erfolgen, beispielsweise wie folgt: Die Zuverlässigkeit der Kompressoranlage wird "hoch", "mittel", "niedrig" bewertet.

Ein Beispiel für eine Optimierung kann die Ermittlung des Parameters Bedarfsdruck sein. Diese Optimierung kann sowohl als Offline-Optimierung als auch im laufenden Betrieb der Kompressoranlage erfolgen. Diesbezüglich wird auf die Veranschaulichung nach Figur 9 verwiesen, die das Problem der Optimierung des Bedarfsdrucks auf den tatsächlich notwendigen Druck besser verständlich macht.

Wesentliche Vorgabe an eine Steuer-/Überwachungseinheit einer Kompressoranlage ist der Druck (Bedarfsdruck), der an der Übergabestelle zum Kundennetz mindestens vorhanden sein muss. Die Steuer-/Überwachungseinheit 22 versucht die Kompressoren 11, 12, 13 so anzusteuern, dass der Bedarfsdruck ($p_{Bedarf}$) immer eingehalten wird und dabei die für die Erzeugung von Druckluft notwendige elektrische Energie minimiert wird. Durch einen sprunghaften Anstieg im Druckluftverbrauch kann es passieren, dass die Steuer-/Überwachungseinheit einen Einschaltbefehl an einen Kompressor 11, 12, 13 zu spät ausgibt und daher der Bedarfsdruck unterschritten wird. Daher wird der Bedarfsdruck ($p_{Bedarf}$) in der Steuer-/Überwachungseinheit grundsätzlich etwas höher eingestellt als der Druck, den der Kunde tatsächlich benötigt ($p_{notwendig}$). Der Abstand zwischen eingestelltem Bedarfsdruck $p_{Bedarf}$, von dem tatsächlich notwendigen Druck $p_{notwendig}$ ist ein Sicherheitspolster. Durch den höheren Bedarfsdruck $p_{Bedarf}$ steigt jedoch der Energiebedarf für die Drucklufterzeugung, da die elektrische Leistungsaufnahme der Kompressoren 11, 12, 13 mit dem Bedarfsdruck $p_{Bedarf}$ ansteigt. Wünschenswert ist es daher, den Bedarfsdruck so niedrig wie möglich, aber immer noch so hoch einzustellen, dass bei Verbrauchssprüngen der tatsächlich notwendige Druck nicht unterschritten wird (vgl. Figur 9).

Es reicht für die Optimierung des Bedarfsdrucks $p_{Bedarf}$ allerdings nicht aus, einfach nur den in der Vergangenheit aufgezeichneten zeitlichen Verlauf des Bedarfsdrucks $p_{Bedarf}(t)$ zu analysieren, da sich die Änderung des Bedarfsdrucks $p_{Bedarf}$ auf das Verhalten der Steuerung der Kompressoranlage auswirkt. Dadurch ergeben sich andere Schalthandlungen, welche einen anderen Verlauf des Drucks ergeben.

Durch Anwendung eines Simulationsmodells der Kompressoranlage, abgeleitet aus dem R&I-Schema der Kompressoranlage, kann durch in der Vergangenheit aufgezeichnete Druckverlaufsprofile der minimale Bedarfsdruck ermittelt werden, bei dem gerade keine Unterschreitungen des tatsächlich notwendigen Drucks mehr auftreten. Mit einem solchen Simulationsmodell, nähere Erläuterungen hierzu lassen sich beispielsweise der WO 2010/072803 A1 entnehmen, kann auch ermittelt werden, wieviel Energie durch die Optimierung des Bedarfdrucks $p_{Bedarf}$ eingespart werden kann.

Auch für die Überwachung von Kompressoranlagen können Modelle eingesetzt werden. Durch den Abgleich des Verhaltens des realen Prozesses mit dem Modell des realen Prozesses kann erkannt werden, wenn im realen Prozess ein Verhalten auftritt, dass man (zumindest unter Berücksichtigung des Modells) so nicht erwartet hat. Laufen Realität und Modell auseinander, wird eine Warnung oder Störung ausgelöst, beispielsweise ein Alarmsignal ausgelöst oder eine Hinweis-E-Mail an einen Anlagenverantwortlichen übersandt.

Im Bereich der Diagnose kann mithilfe von Modellen die Ursache für ein Fehlverhalten eingegrenzt bzw. ermittelt werden. Hierbei werden z.B. am Modell verschiedene Fehlerszenarien durchsimuliert und mit den im realen Prozess beim Auftreten des Fehlers beobachteten Daten abgeglichen. Das Szenario, welches am besten mit der Realität übereinstimmt, gibt einen Hinweis auf die Fehlerursache.

Unter Anwendung von Voraussimulationen ist es möglich, den nächsten Termin für eine Wartung der Kompressoranlage bzw. der Kompressoren bzw. der Peripheriegeräte abzuschätzen. Unter Annahme eines Druckluftverlaufprofils (z.B. in der Vergangenheit in der betroffenen Kompressoranlage beobachtet) wird ermittelt, wie die einzelnen Kompressoren und Peripheriegeräte einer Kompressoranlage in den kommenden Wochen oder Monaten voraussichtlich betrieben bzw. beansprucht werden. Aus dem Verlauf der Betriebszustände der Kompressoren und der Peripheriegeräte und einem Modell für den Verschleiß der wartungsrelevanten Bauteile/Betriebsstoffe kann der Termin bestimmt werden, an dem die Verschleißgrenze (Standzeit) des Bauteils/Betriebsstoffes erreicht ist.

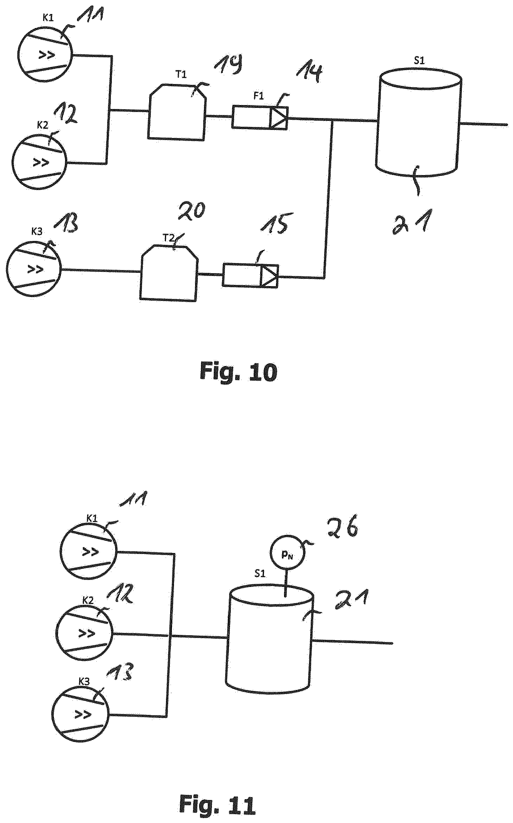

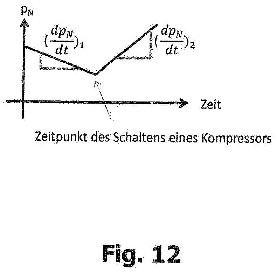

Nachfolgend wird ein weiteres Beispiel angegeben, wie unter Anwendung eines quantitativen Modells einer Kompressoranlage sich das wirksame Puffervolumen einer Kompressoranlage bestimmen lässt. Verdeutlicht wird dies anhand der Kompressoranlage, wie sie in Figur 10 dargestellt ist. Die Kompressoranlage besteht aus den drei Kompressoren 11, 12, 13, den beiden Trocknern 19, 20, den beiden Filtern 14, 15 und dem Druckluftspeicher 21. Aufgabe der Steuer-/Überwachungseinheit 22 ist es zu vermitteln, welches wirksame Puffervolumen der Druckluftspeicher 21 (Volumen eventuell bekannt) zusammen mit dem Rohrleitungsnetz (Volumen meist unbekannt) besitzt. Die Information über das wirksame Puffervolumen wird z.B. für die Berechnung des aktuellen Druckluftverbrauchs verwendet, aus dem wiederum die Zeitpunkte für die Schalthandlungen von Kompressoren abgeleitet werden. Für die Ermittlung des wirksamen Puffervolumens wird die Kompressoranlage aus Figur 10 zunächst in einem Modell abgebildet, welches nur noch die für die Ermittlung des Puffervolumens relevanten Komponenten enthält. Es ergibt sich ein unter dem Aspekt Puffervolumen vereinfachtes Modell AAM, wie es in Figur 11 veranschaulicht wird. Trockner 19, 20 sowie Filter 14, 15 haben für die Berechnung des wirksamen Puffervolumens keine Relevanz und sind daher im aspektspezifischen Ausgangsmodell AAM nicht berücksichtigt. Die Kompressoren 11, 12, 13 sind hingegen relevant, da die Schalthandlungen an Kompressoren dazu genutzt werden, über die Änderung des Gradienten des am Druckluftspeicher 21 angebrachten Drucksensor 26 das wirksame Puffervolumen zu bestimmen. Die Berechnung des Puffervolumens geschieht, indem der Druckgradient vor der Schalthandlung mit dem Druckgradienten nach der Schalthandlung verglichen wird. Die Schalthandlung eines Kompressors führt - bei konstantem Druckluftverbrauch - dazu, dass sich der Druckgradient ändert, wie dies anhand von Figur 12 veranschaulicht ist. Für die Berechnung werden mehrere Annahmen zugrunde gelegt:

- Rund um den Zeitpunkt der Schalthandlung ändert sich das "reale" wirksame Puffervolumen nicht.
- Rund um den Zeitpunkt der Schalthandlung ist der Druckluftverbrauch konstant.
- Die Temperatur der Druckluft im Rohrleitungssystem und im Pufferspeicher ist konstant.

Unter der Annahme, dass die Liefermenge des schaltenden Kompressors bekannt ist, z.B. weil die Liefermenge in einer der Steuer- und Überwachungseinheit 22 zugänglichen Datenbank hinterlegt ist, lässt sich das wirksame Puffervolumen $V_{eff}$ aus der Änderung des Druckgradienten und der Änderung der Liefermenge der Kompressoren $\Delta FAD$ (entspricht der Liefermenge des Einzelkompressors) und des Umgebungsdrucks $p_{amb}$ berechnen:

$$V_{eff} = \frac{\Delta FAD}{\left(\frac{dp_N}{dt}\right)_2 - \left(\frac{dp_N}{dt}\right)_1} * p_{amb}$$

Speziell die Annahme, dass der Druckluftverbrauch rund um den Zeitpunkt der Schalthandlung konstant ist, wird in der Praxis nicht bei jeder Schalthandlung eingehalten werden. Daher ist es möglich und vorteilhaft, die einzelne Schätzung des wirksamen Puffervolumens über eine Filterung (z.B. Mittelwertbildung) mit vorangegangenen Schätzungen zu verrechnen. Für die Weiterverarbeitung wird dann z.B. der Mittelwert der letzten 20 Schätzungen verwendet. Unter der sehr realistischen Annahme, dass die Verbrauchsänderung während des Schaltvorgangs mit gleicher Wahrscheinlichkeit nach oben als auch nach unten erfolgt, werden sich im Mittel die Verbrauchsänderungen bei der Filterung neutralisieren.

Als Beispiel für die Analyse des Verhaltens der Kompressoranlage mag die Analyse unter dem Aspekt reservegrad dienen: Ein Maß für die Zuverlässigkeit einer Kompressoranlage ist der Reservegrad. Der Reservegrad wird maßgeblich dadurch bestimmt, ob der Druckluftverbrauch für das betrachtete Zeitintervall die verfügbare Liefermenge (unter Berücksichtigung der im Druckluftspeicher gespeicherten Druckluft) überstieg bzw. überstiegen hätte, wenn ein Kompressor ausgefallen wäre. Für diese Analyseroutine wird sinnvollerweise auf die als R&I-Schema eingegebene Konfiguration der Kompressoranlage und daraus abgeleiteter Modelle zurückgegriffen. Die Berechnung des Reservegrads kann sowohl als Analyse als auch als Überwachung aufgefasst werden. Wird die Analyse des Reservegrads zur Überwachung eingesetzt, kann der Betreiber der Kompressoranlage reagieren und vor der Unterschreitung des mindestens notwendigen Drucks Druckluftverbraucher abschalten oder die Kompressoranlage mit weiteren Kompressoren ausrüsten. Den Grad der Überlastung könnte man am Ausfall eines Kompressors festmachen:

- Schlimmster Grad der Überlastung: Ist es im betrachteten Zeitraum zu Druckunterschreitungen gekommen, obwohl alle Kompressoren für die Drucklufterzeugung zur Verfügung standen?
- Schlimmer Grad der Überlastung: Wäre es zu Druckunterschreitungen gekommen, wenn der kleinste Kompressor ausgefallen wäre?
- Mittlerer Grad der Überlastung: Wäre es zu Druckunterschreitungen gekommen, wenn ein mittlerer Kompressor ausgefallen wäre?
- Schwacher Grad der Überlastung: Wäre es zu Druckunterschreitungen gekommen, wenn ein großer Kompressor ausgefallen wäre?

Die Analyse, ob beispielsweise ein schlimmer Grad der Überlastung im betrachteten Zeitraum vorlag, erfolgt dadurch, dass eine Simulation der Druckluftstation anhand der abgeleiteten Modelle mit der Vorgabe erfolgt, dass der kleinste Kompressor nicht für die Druckluftversorgung eingesetzt werden darf. Die Simulation selbst kann beispielsweise wie in WO 2010/072803 A1 beschrieben durchgeführt werden.

Durch die Anwendung von abgeleiteten Modellen über das Verhalten der Komponenten einer Kompressoranlage kann eine Prognose für den nächsten Wartungstermin für die Kompressoranlage, für einzelne Kompressoren oder einzelne Peripheriegeräte erstellt werden. Hierfür können abgeleitete Modelle zur Voraussimulation verwendet werden. Mit einem abgeleiteten Modell zur Voraussimulation kann für ein gegebenes Druckluftverbrauchsprofil vorhergesagt werden, wie sich die einzelnen Kompressoren oder Peripheriegeräte der Kompressoranlage über die Zeit verhalten werden für die Durchführung einer Voraussimulation im Rahmen der Modellgenauigkeit unter Berücksichtigung des Steuerungs-Algorithmus in der Steuer-/Überwachungseinrichtung die Schaltbefehle an die Kompressoren so berechnet, wie sie sich in der echten Kompressoranlage für das gegebene Druckluftverbrauchsprofil ergeben würden. Aus den Schaltbefehlen an die Kompressoren lässt sich das Laufverhalten der Kompressoren ableiten. Das Laufverhalten der Kompressoren beschreibt, in welchem Betriebszustand sich ein Kompressor wann befindet.

Sofern ein Modell für die wartungsrelevanten Bauteile oder Betriebsstoffe existiert, welches aus dem Verlauf des Betriebszustands der Kompressoranlage auf den Verschleißzustand des wartungsrelevanten Bauteils/Betriebsstoffs schließen lässt, kann anhand der Ergebnisse der Voraussimulation ermittelt werden, wann ein Verschleißzustand erreicht sein wird, der eine Wartungsmaßnahme notwendig macht. Für Kompressoren gilt heute, dass der Verschleißzustand eines wartungsrelevanten Bauteils/Betriebsstoffs anhand der Laufstunden eines Kompressors ermittelt wird. So ist z.B. der Wechsel des Öls alle 3.000 Betriebsstunden notwendig.

In Zukunft ist es möglich, den Verschleißzustand eines wartungsrelevanten Bauteils/Betriebsstoffs nicht mehr nur an den Betriebsstunden, sondern auch an den Umgebungs-/Betriebsbedingungen der Kompressoranlage festzumachen. Wenn die Modelle zur Voraussimulation für die Ermittlung des Verschleißzustands relevanten Effekte (z.B. Verdichtungstemperatur, Druck im Ölabscheidebehälter, Partikelbelastung der angesaugten Luft, Umgebungstemperatur) mit hinreichender Genauigkeit abbilden, lassen sich auch Prognosen für Wartungsmaßnahmen erstellen, wenn der Verschleißzustand des betroffenen Bauteils/Betriebsstoffs nicht allein über die Laufstunden ermittelt werden kann.

Die Genauigkeit für die Prognose des Termins für die nächste Wartungsmaßnahme hängt natürlich davon ab, inwiefern der in der Voraussimulation angenommene Verlauf des Druckluftverbrauchs in der Realität auch auftritt.

Ein Vorteil der Prognose des nächsten Wartungstermins auf Basis von Voraussimulationen im Vergleich zur trivialen Methode der Extrapolation der Laufstunden ist, dass eine Prognose auch dann möglich ist, wenn sich die Zusammensetzung der Druckluftstation ändert (z.B. Hinzufügen oder Entfernen eines Kompressors) oder eine Umparametrierung der Druckluftsteuerung vorgenommen wird (z.B. Änderung der Zu- und Abschaltreihenfolge von Kompressoren).

Die Prognose für die Durchführung der nächsten Wartungsmaßnahme wird regelmäßig wiederholt (z.B. einmal täglich), wobei der in der aktuellen Kompressoranlage seit Durchführung der letzten Prognose beobachtete Verlauf der Kompressorzustände für die Durchführung einer neuen Prognose mit herangezogen wird. Dadurch wird mit der Zeit die Prognose des nächsten Wartungstermins immer genauer, da der Anteil des real beobachteten Verschleißes Eingang in die Prognose findet und damit der Anteil des bis zur nächsten Wartung noch anfallenden Verschleißes (als Unsicherheit im Modell) immer geringer wird.

Das erfindungsgemäße Verfahren zeichnet sich im Ergebnis dadurch aus, dass ausgehend von der Betriebsdatenerfassung bis zur Auswertung der Betriebsdaten zwecks

- Steuern und/oder Regeln
- Überwachen
- Diagnose
- Optimierung
- Prognose eines Wartungstermins (predictive maintenance)

einzelne Verfahrensschritte durchzuführen sind. Die einzelnen Verfahrensschritte können wie folgt definiert werden.

- Die Wirkzusammenhänge in der zu analysierenden Kompressoranlage müssen definiert, ggf. eingegeben werden.

- Betriebsdaten der Kompressoranlage müssen in geeigneter Form standardisiert werden.
- Basierend auf den Wirkzusammenhängen der Kompressoranlage werden ein oder mehrere Ausgangsmodelle sowie hiervon abgeleitete Modelle erstellt.
- Aspektspezifische Modelle der Kompressoranlage werden zur Beantwortung konkreter Fragestellungen herangezogen.

Die beschriebenen vier Verfahrensschritte sind sowohl örtlich als auch zeitlich voneinander entkoppelt. Es existiert lediglich eine temporale Verknüpfung (Vorher-Nachher-Verknüpfung) zwischen den Verfahrensschritten, d.h. einige Verfahrensschritte müssen vor anderen Verfahrensschritten ausgeführt und deren Ergebnisse zur Verfügung gestellt werden, bevor andere Verfahrensschritte, die die Ergebnisse aus vorausgegangenen Verfahrensschritten verwenden, ablaufen können. Die Verfahrensschritte können jedoch auf verschiedene Systeme verteilt werden (müssen es aber nicht). Falls die Verfahrensschritte auf verschiedenen Systemen ablaufen, muss jedoch die Möglichkeit für einen Informationsaustausch (mindestens unidirektional) gegeben sein.

Obwohl die Erfindung anhand einer Kompressoranlage, also für Überdruck, beschrieben wurde, sind sämtliche Prinzipien auch auf eine Vakuumanlage, bei der anstelle von Kompressoren Pumpen zusammenwirken, übertragbar.

Weiterhin wurde vorliegend allgemein von Kompressoren gesprochen, ohne den besonderen Typ der Kompressoren festzulegen. In einer Ausgestaltung können sämtliche Kompressoren beispielsweise als Verdrängerverdichter ausgestaltet sein, wobei dies aber nur als spezielle Ausgestaltung anzusehen ist und nicht generell zwingend ist.

Bezugszeichenliste

| | |
|---|---|
| 11, 12, 13 | Kompressoren |
| 14, 15, 16 | Filter |
| 17, 18 | Ventile |
| 19, 20 | Trockner |
| 21 | Druckluftspeicher |
| 22 | Steuer-/Überwachungseinheit |
| 23 | Editor |
| 24 | Speicherabschnitt |
| 25 | Datenerfassungseinheit |
| 26 | Drucksensor |

**Patentansprüche**

1. Verfahren zum Steuern und/oder Überwachen einer Kompressoranlage umfassend ein oder mehrere Kompressoren (11, 12, 13) und ein oder mehrere Peripheriegeräte (14 bis 21),

wobei die Kompressoren (11, 12, 13) und Peripheriegeräte (14 bis 21) in einer vorbestimmten Konfiguration angeordnet bzw. verschaltet sind, wobei die Kompressoranlage über eine Steuer-/Überwachungseinheit (22) gesteuert und/oder überwacht wird,

**dadurch gekennzeichnet, dass**

basierend auf einem oder mehreren Ausgangsmodellen ($M_1$, $M_2$, ...) der Kompressoranlage, das beispielsweise auf einem R&I-Schema, ggf. inklusive der Spezifizierung der Kompressoren (11, 12, 13) und der Peripheriegeräte (14 bis 21) beruht, ein oder mehrere abgeleitete Modelle ($\tilde{M}_a$, $\tilde{M}_b$, ...), die Wirkzusammenhänge zwischen den einzelnen Kompressoren (11, 12, 13) und Peripheriegeräten (14 bis 21) und ggf. auch dynamische Prozesse berücksichtigen, erstellt werden,

wobei das eine oder die mehreren abgeleiteten Modelle ($\tilde{M}_a$, $\tilde{M}_b$, ...) jeweils aspektspezifische Modelle (AM) sind, die unter Einsatz eines aspektspezifischen Analysealgorithmus aus dem einen oder mehreren Ausgangsmodellen ($M_1$, $M_2$, ...) oder aus dem einen oder mehreren Ausgangsmodellen ($M_1$, $M_2$, ...) über ein oder mehrere Zwischenmodelle ($M_1'$, $M_2'$, ..., $AAM_1$, $AAM_2$, ...) erstellt werden, und dass das eine oder die mehreren abgeleiteten Modelle ($\tilde{M}_a$, $\tilde{M}_b$, ...) in nachfolgenden Steuer-, Überwachungs-, Diagnose- oder Auswertroutinen zugrunde gelegt werden.

2. Verfahren nach Anspruch 1, **dadurch gekennzeichnet, dass** die Information über das aspektspezifische Verhalten eines Kompressors (11, 12, 13) oder eines Peripheriegerätes (14 bis 21) in einem oder mehreren im Aspekt-Ausgangsmodell (AAM) zu berücksichtigenden Komponentenmodellen (KM) und/oder im Analysealgorithmus selbst enthalten ist.

3. Verfahren nach Anspruch 2, **dadurch gekennzeichnet, dass** für jedes zu erstellende aspektspezifische Modell AM ein zugeordneter Analysealgorithmus vorgesehen ist.

4. Verfahren nach einem der Ansprüche 1 bis 3, **dadurch gekennzeichnet, dass** das abgeleitete Modell ($\tilde{M}_a$, $\tilde{M}_b$, ...) in der zentralen Steuer-/Überwachungseinheit (22) abgespeichert wird.

5. Verfahren nach einem der Ansprüche 1 bis 4, **dadurch gekennzeichnet, dass** das oder die abgeleiteten Modelle ($\tilde{M}_a$, $\tilde{M}_b$, ...) in einem externen System hergeleitet und/oder gespeichert und/oder angewandt werden kann.

6. Verfahren nach einem der Ansprüche 1 bis 5, **dadurch gekennzeichnet, dass** das oder die abgeleiteten Modelle ($\tilde{M}_a$, $\tilde{M}_b$, ...) kontinuierlich oder zyklisch oder ereignisbasiert überprüft und ggf. automatisch angepasst werden.

7. Verfahren nach einem der Ansprüche 1 bis 6, **dadurch gekennzeichnet, dass** bei Änderung des oder der Ausgangsmodelle ($M_1$, $M_2$, ...) und/oder bei Änderung eines Komponentenmodells (KM), beispielsweise da bauliche Veränderungen an der Kompressoranlage vorgenommen wurden, auch das oder die abgeleiteten Modelle ($\tilde{M}_a$, $\tilde{M}_b$, ...) angepasst werden.

8. Verfahren nach einem der Ansprüche 1 bis 7, **dadurch gekennzeichnet, dass** unterschiedliche domänespezifische Ausgangsmodelle ($M_1$, $M_2$, ...), insbesondere ein oder mehrere druckluftspezifische Ausgangsmodelle, ein oder mehrere stromversorgungsspezifische Ausgangsmodelle, ein oder mehrere auf den Kühlwasserkreislauf bezogene Ausgangsmodelle oder ein oder mehrere auf die Wärmerückgewinnung bezogene Ausgangsmodelle Berücksichtigung finden.

9. Verfahren nach einem der Ansprüche 1 bis 8, **dadurch gekennzeichnet, dass** das abgeleitete Modell ($\tilde{M}_a$, $\tilde{M}_b$, ...) ein Zwischenmodell ($M_1'$, $M_2'$, ...) ist, das gegenüber dem oder den Ausgangsmodellen auch ein dynamisches Verhalten bzw. unterschiedliche Betriebszustände der Kompressoranlage berücksichtigt.

10. Verfahren nach einem der Ansprüche 1 bis 9, **dadurch gekennzeichnet, dass** das abgeleitete Modell ($\tilde{M}_a$, $\tilde{M}_b$, ...) ein Zwischenmodell ($AAM_1$, $AAM_2$, ...) ist, das gegenüber einem oder mehreren Ausgangsmodellen ($M_1$, $M_2$, ...) oder einem oder mehreren anderen Zwischenmodellen ($M_1'$, $M_2'$, ...) aspektspezifisch angepasst und ggf. vereinfacht ist.

11. Verfahren nach einem der Ansprüche 1 bis 10, **dadurch gekennzeichnet, dass** dem oder den Ausgangsmodellen ($M_1$, $M_2$, ...) die konkret gegebene Konfiguration der Kompressoranlage in Gestalt eines R&I-Schemas zugrunde liegt, die insbesondere nach Erstellung der Kompressoranlage über einen Editor (23) eingegeben wird.

12. Verfahren zum Überwachen einer Kompressoranlage nach Anspruch 1, wobei die Kompressoranlage über eine Steuer-/Überwachungseinheit (22) gesteuert und/oder überwacht wird, wobei das Verfahren eine Prognose für den nächsten Wartungstermin der Kompressoranlage oder einzelner Kompressoren oder einzelner Peripheriegeräte erstellt, **dadurch gekennzeichnet,**

    - **dass**, insbesondere nach Erstellung der Kompressoranlage, die konkret gegebene Konfiguration in Gestalt eines R&I-Schemas über einen Editor (23) eingegeben wird und diese Eingabe die Grundlage für das eine oder die mehreren Ausgangsmodelle bildet, und

- **dass** unter Berücksichtigung standardisierter Betriebsdaten der Kompressoranlage unter Verwendung des oder der abgeleiteten Modelle ($\tilde{M}_a$, $\tilde{M}_b$, ...) eine Prognose für den nächsten Wartungstermin erstellt wird.

13. Verfahren zum Überwachen einer Kompressoranlage nach Anspruch 1,
wobei die Kompressoranlage über eine Steuer-/Überwachungseinheit (22) gesteuert und/oder überwacht wird,
wobei das Verfahren als Diagnoseverfahren zur Diagnose der Kompressoranlage oder einzelner Kompressoren oder einzelner Peripheriegeräte ausgestaltet ist, **dadurch gekennzeichnet,**

- **dass**, insbesondere nach Erstellung der Kompressoranlage, die konkret gegebene Konfiguration in Gestalt eines R&I-Schemas über einen Editor (23) eingegeben wird und diese Eingabe die Grundlage für das eine oder die mehreren Ausgangsmodelle bildet, und
- **dass** unter Berücksichtigung standardisierter Betriebsdaten der Kompressoranlage unter Verwendung des oder der abgeleiteten Modelle ($\tilde{M}_a$, $\tilde{M}_b$, ...) eine Fehlerdiagnose durchgeführt wird.

14. Kompressoranlage umfassend ein oder mehrere Kompressoren (11, 12, 13) sowie ein oder mehrere Peripheriegeräte (14 bis 21) sowie eine Steuer-/Überwachungseinheit (22),
wobei die Kompressoren (11, 12, 13) und Peripheriegeräte (14 bis 21) in einer vorbestimmten Konfiguration angeordnet bzw. verschaltet sind, wobei die Kompressoranlage über eine Steuer-/Überwachungseinheit (22) gesteuert und/oder überwacht wird,
**dadurch gekennzeichnet, dass**
die Steuer-/Überwachungseinheit (22) derart ausgebildet und eingerichtet ist, dass sie bei Steuer-, Überwachungs-, Diagnose- oder Auswertroutinen auf ein oder mehrere abgeleitete Modelle ($\tilde{M}_a$, $\tilde{M}_b$, ...) der Kompressoranlage zurückgreift, das oder die basierend auf einem oder mehreren Ausgangsmodellen ($M_1$, $M_2$, ...) der Kompressoranlage erstellt werden, aber auch Wirkzusammenhänge zwischen den einzelnen Kompressoren (11, 12, 13) und der Peripheriegeräte (14 bis 21) sowie ggf. auch dynamische Prozesse berücksichtigt, wobei das eine oder die mehreren abgeleiteten Modelle ($\tilde{M}_a$, $\tilde{M}_b$, ...) jeweils aspektspezifische Modelle (AM) sind, die unter Einsatz eines aspektspezifischen Analysealgorithmus aus dem einen oder mehreren Ausgangsmodellen

($M_1$, $M_2$, ...) oder aus dem einen oder mehreren Ausgangsmodellen ($M_1$, $M_2$, ...) über ein oder mehrere Zwischenmodelle ($M_1'$, $M_2'$, ..., $AAM_1$, $AAM_2$, ...) erstellt werden.

15. Kompressoranlage nach Anspruch 14, **dadurch gekennzeichnet, dass** die Steuer-/Überwachungseinheit für die Abspeicherung des oder der abgeleiteten Modelle ($\tilde{M}_a$, $\tilde{M}_b$, ...) Sorge trägt.

16. Kompressoranlage nach Anspruch 14 oder 15, **dadurch gekennzeichnet, dass** die Steuer-/Überwachungseinheit (22) in einem oder mehreren miteinander in Wirkverbindung stehenden Servern oder in einem oder mehreren virtuellen Rechnern ganz oder teilweise implementiert ist.

17. Kompressoranlage nach einem der Ansprüche 14 bis 16, die neben der Steuer-/Überwachungseinheit auch einen Editor (23) umfasst, **dadurch gekennzeichnet, dass** der Editor (23) zur Eingabe der konkret gegebenen Konfiguration der Kompressoranlage in Gestalt eines R&I-Schemas ausgebildet und bestimmt ist und der Editor (23) mit der Steuer-/Überwachungseinheit (22) in Wirkverbindung steht derart, dass das eingegebene R&I-Schema an die Steuer-/ Überwachungseinheit (22) übertragen wird und es dort als Ausgangsgrundlage zur Erstellung eines oder mehrerer Ausgangsmodelle ($M_1$, $M_2$, ...) dient.

18. Steuer-/Überwachungseinheit zum Steuern und/oder Überwachen einer Kompressoranlage umfassend ein oder mehrere Kompressoren (11, 12, 13) und ein oder mehrere Peripheriegeräte (14 bis 21),
wobei die Kompressoren (11, 12, 13) und Peripheriegeräte (14 bis 21) in einer vorbestimmten Konfiguration angeordnet bzw. verschaltet sind und die Steuer-/Überwachungseinheit die Steuerung und/oder Überwachung der Kompressorenanlage bewirkt,
**dadurch gekennzeichnet, dass**
das basierend auf einem oder mehreren Ausgangsmodellen ($M_1$, $M_2$, ...) der Kompressoranlage, das beispielsweise auf einem R&I-Schema, ggf. inklusive der Spezifizierung der Kompressoren (11, 12, 13) und der Peripheriegeräte (14 bis 21) beruht, ein oder mehrere abgeleitete Modelle ($\tilde{M}_a$, $\tilde{M}_b$, ...) das Wirkzusammenhänge zwischen den einzelnen Kompressoren (11, 12, 13) und Peripheriegeräten (14 bis 21) und ggf. auch dynamische Prozesse berücksichtigt, erstellt wird, wobei das eine oder die mehreren abgeleiteten Modelle ($\tilde{M}_a$, $\tilde{M}_b$, ...) jeweils aspektspezifische Modelle (AM) sind, die unter Einsatz eines aspektspezifischen Analysealgorithmus aus dem einen oder mehreren Ausgangsmodellen ($M_1$, $M_2$, ...) oder aus dem einen oder mehreren Ausgangsmodellen ($M_1$, $M_2$, ...) über ein oder mehrere Zwischen-

modelle ($M_1'$, $M_2'$, ..., $AAM_1$, $AAM_2$, ...) erstellt werden, und dass das eine oder die mehreren abgeleiteten Modelle ($\tilde{M}_a$, $\tilde{M}_b$, ...) in nachfolgenden Steuer-, Überwachungs-, Diagnose- oder Auswertroutinen zugrunde gelegt werden.

**Claims**

1. Method for controlling and/or monitoring a compressor system comprising one or more compressors (11, 12, 13) and one or more peripheral devices (14 to 21),
wherein the compressors (11, 12, 13) and peripheral devices (14 to 21) are arranged and/or connected in a predetermined configuration,
wherein the compressor system is controlled and/or monitored by way of a control/monitoring unit (22), **characterized in that**,
based on one or more initial models ($M_1$, $M_2$, ...) of the compressor system, which are based for example on a P&I diagram, optionally including the specification of the compressors (11, 12, 13) and of the peripheral devices (14 to 21), one or more derived models ($\tilde{M}_a$, $\tilde{M}_b$, ...) are created which take into account the operational relationships between the individual compressors (11, 12, 13) and peripheral devices (14 to 21) and optionally also dynamic processes,
wherein the one or more derived models ($\tilde{M}_a$, $\tilde{M}_b$, ...) are in each case aspect-specific models (AM) which are created using an aspect-specific analysis algorithm from the one or more initial models ($M_1$, $M_2$, ...) or from the one or more initial models ($M_1$, $M_2$, ...) via one or more intermediate models ($M_1'$, $M_2'$, ..., $AAM_1$, $AAM_2$, ...), and
**in that** the one or more derived models ($\tilde{M}_a$, $\tilde{M}_b$, ...) are used as a basis in subsequent control, monitoring, diagnostic or evaluation routines.

2. Method according to claim 1, **characterized in that** the information about the aspect-specific behaviour of a compressor (11, 12, 13) or of a peripheral device (14 to 21) is contained in one or more component models (KM), which are to be taken into account in the aspect initial model (AAM), and/or in the analysis algorithm itself.

3. Method according to claim 2, **characterized in that** an associated analysis algorithm is provided for each aspect-specific model AM to be created.

4. Method according to any one of claims 1 to 3, **characterized in that** the derived model ($\tilde{M}_a$, $\tilde{M}_b$, ...) is stored in the central control/monitoring unit (22).

5. Method according to any one of claims 1 to 4, **characterized in that** the derived model (s) ($\tilde{M}_a$, $\tilde{M}_b$, ...)

can be derived and/or stored and/or applied in an external system.

6. Method according to any one of claims 1 to 5, **characterized in that** the derived model (s) ($\tilde{M}_a$, $\tilde{M}_b$, ...) are checked continuously or cyclically or in an event-based manner and are optionally automatically adapted.

7. Method according to any one of claims 1 to 6, **characterized in that**, in the event of a change in the initial model (s) ($M_1$, $M_2$, ...) and/or in the event of a change in a component model (KM), for example as a result of structural changes having been made to the compressor system, the derived model (s) ($\tilde{M}_a$, $\tilde{M}_b$, ...) are also adapted.

8. Method according to any one of claims 1 to 7, **characterized in that** different domain-specific initial models ($M_1$, $M_2$, ...) are taken into account, in particular one or more compressed air-specific initial models, one or more power supply-specific initial models, one or more initial models relating to the cooling water circuit, or one or more initial models relating to the recovery of heat.

9. Method according to any one of claims 1 to 8, **characterized in that** the derived model ($\tilde{M}_a$, $\tilde{M}_b$, ...) is an intermediate model ($M_1'$, $M_2'$, ...) which, in comparison to the initial model(s), also takes into account a dynamic behaviour and/or different operating states of the compressor system.

10. Method according to any one of claims 1 to 9, **characterized in that** the derived model ($\tilde{M}_a$, $\tilde{M}_b$, ...) is an intermediate model ($AAM_1$, $AAM_2$, ...) which, in comparison to one or more initial models ($M_1$, $M_2$, ...) or one or more other intermediate models ($M_1'$, $M_2'$, ...), is adapted in an aspect-specific manner and optionally simplified.

11. Method according to any one of claims 1 to 10, **characterized in that** the initial model (s) ($M_1$, $M_2$, ...) are based on the specifically provided configuration of the compressor system in the form of a P&I diagram, which is input by way of an editor (23) in particular after the compressor system has been created.

12. Method for monitoring a compressor system according to claim 1,
wherein the compressor system is controlled and/or monitored by way of a control/monitoring unit (22),
wherein the method forecasts the next maintenance date for the compressor system or for individual compressors or individual peripheral devices, **characterized**

- **in that**, in particular after the compressor system has been created, the specifically provided configuration is input in the form of a P&I diagram by way of an editor (23) and this input forms the basis for the one or more initial models, and
- **in that**, taking into account standardized operating data of the compressor system, the next maintenance date is forecast using the derived model(s) ($\tilde{M}_a$, $\tilde{M}_b$, ...).

13. Method for monitoring a compressor system according to claim 1,
wherein the compressor system is controlled and/or monitored by way of a control/monitoring unit (22),
wherein the method is configured as a diagnostic method for diagnosing the compressor system or individual compressors or individual peripheral devices, **characterized**

- **in that**, in particular after the compressor system has been created, the specifically provided configuration is input in the form of a P&I diagram by way of an editor (23) and this input forms the basis for the one or more initial models, and
- **in that**, taking into account standardized operating data of the compressor system, a fault diagnosis is carried out using the derived model(s) ($\tilde{M}_a$, $\tilde{M}_b$, ...).

14. Compressor system comprising one or more compressors (11, 12, 13) and one or more peripheral devices (14 to 21) and also a control/monitoring unit (22),
wherein the compressors (11, 12, 13) and peripheral devices (14 to 21) are arranged and/or connected in a predetermined configuration,
wherein the compressor system is controlled and/or monitored by way of a control/monitoring unit (22),
**characterized in that**
the control/monitoring unit (22) is configured and designed such that, during control, monitoring, diagnostic or evaluation routines, it accesses one or more derived models ($\tilde{M}_a$, $\tilde{M}_b$, ...) of the compressor system which are created on the basis of one or more initial models ($M_1$, $M_2$, ...) of the compressor system but which also take into account operational relationships between the individual compressors (11, 12, 13) and the peripheral devices (14 to 21) and optionally also dynamic processes, wherein the one or more derived models ($\tilde{M}_a$, $\tilde{M}_b$, ...) are in each case aspect-specific models (AM) which are created using an aspect-specific analysis algorithm from the one or more initial models ($M_1$, $M_2$, ...) or from the one or more initial models ($M_1$, $M_2$, ...) via one or more intermediate models ($M_1$', $M_2$', ..., $AAM_1$, $AAM_2$, ...).

15. Compressor system according to claim 14, **charac-**

terized in that the control/monitoring unit ensures the storage of the derived model(s) ($\tilde{M}_1$, $\tilde{M}_2$, ...).

16. Compressor system according to claim 14 or 15, **characterized in that** the control/monitoring unit (22) is implemented entirely or partially in one or more servers, which are operatively connected to one another, or in one or more virtual computers.

17. Compressor system according to any one of claims 14 to 16, which also comprises an editor (23) in addition to the control/monitoring unit, **characterized in that** the editor (23) is configured and intended to input the specifically provided configuration of the compressor system in the form of a P&I diagram, and the editor (23) is operatively connected to the control/monitoring unit (22) such that the input P&I diagram is transmitted to the control/monitoring unit (22) and serves therein as a starting point for creating one or more initial models ($M_1$, $M_2$, ...).

18. Control/monitoring unit for controlling and/or monitoring a compressor system comprising one or more compressors (11, 12, 13) and one or more peripheral devices (14 to 21),
wherein the compressors (11, 12, 13) and peripheral devices (14 to 21) are arranged and/or connected in a predetermined configuration and the control/monitoring unit controls and/or monitors the compressor system,
**characterized in that**,
based on one or more initial models ($M_1$, $M_2$, ...) of the compressor system, which are based for example on a P&I diagram, optionally including the specification of the compressors (11, 12, 13) and of the peripheral devices (14 to 21), one or more derived models ($\tilde{M}_a$, $\tilde{M}_b$, ...) are created which take into account the operational relationships between the individual compressors (11, 12, 13) and peripheral devices (14 to 21) and optionally also dynamic processes, wherein the one or more derived models ($\tilde{M}_a$, $\tilde{M}_b$, ...) are in each case aspect-specific models (AM) which are created using an aspect-specific analysis algorithm from the one or more initial models ($M_1$, $M_2$, ...) or from the one or more initial models ($M_1$, $M_2$, ...) via one or more intermediate models ($M_1$', $M_2$', ..., $AAM_1$, $AAM_2$, ...), and
**in that** the one or more derived models ($\tilde{M}_a$, $\tilde{M}_b$, ...) are used as a basis in subsequent control, monitoring, diagnostic or evaluation routines.

**Revendications**

1. Procédé pour commander et/ou surveiller une installation de compresseurs comprenant un ou plusieurs compresseurs (11, 12, 13) et un ou plusieurs appareils périphériques (14 à 21),

dans lequel les compresseurs (11, 12, 13) et les appareils périphériques (14 à 21) sont disposés et connectés selon une configuration prédéterminée,

dans lequel l'installation de compresseurs est commandée et/ou surveillée par une unité de commande/de surveillance (22),

**caractérisé en ce qu'**un ou plusieurs modèles dérivés ($\tilde{M}_a$, $\tilde{M}_b$ ...) prenant en compte des relations d'action entre les différents compresseurs (11, 12, 13) et les appareils périphériques (14 à 21) et éventuellement aussi des processus dynamiques, sont créés sur la base d'un ou plusieurs modèles de départ ($M_1$, $M_2$...) de l'installation de compresseurs, basés par exemple sur un schéma de tuyauterie et d'instrumentation, incluant éventuellement les spécifications des compresseurs (11, 12, 13) et des appareils périphériques (14 à 21),

les un ou plusieurs modèles dérivés ($\tilde{M}_a$, $\tilde{M}_b$ ...) étant des modèles spécifiques de l'aspect (AM) qui sont créés en utilisant un algorithme d'analyse spécifique de l'aspect tiré de l'un ou des plusieurs modèles de départ ($M_1$, $M_2$...) ou de l'un ou des plusieurs modèles de départ ($M_1$, $M_2$...) via un ou plusieurs modèles intermédiaires ($M_1'$, $M_2'$... $AAM_1$, $AAM_2$ ...), et

**en ce que** les un ou plusieurs modèles dérivés ($\tilde{M}_a$, $\tilde{M}_b$ ...) sont pris pour base des routines de commande, de surveillance, de diagnostic ou d'analyse qui suivent.

2. Procédé selon la revendication 1, **caractérisé en ce que** l'information concernant le comportement spécifique de l'aspect d'un compresseur (11, 12, 13) ou d'un appareil périphérique (14 à 21) est contenue dans un ou plusieurs modèles de composants (KM) à prendre en compte dans le modèle d'aspect de départ (AAM) et/ou dans l'algorithme d'analyse même.

3. Procédé selon la revendication 2, **caractérisé en ce qu'**un algorithme d'analyse spécifique de l'aspect est prévu pour chaque modèle spécifique de l'aspect (AM) à créer.

4. Procédé selon l'une des revendications 1 à 3, **caractérisé en ce que** le modèle dérivé ($\tilde{M}_a$, $\tilde{M}_b$ ...) est enregistré dans l'unité centrale de commande/de surveillance (22).

5. Procédé selon l'une des revendications 1 à 4, **caractérisé en ce que** le ou les modèles dérivés ($\tilde{M}_a$, $\tilde{M}_b$ ...) sont dérivés et/ou enregistrés et/ou appliqués dans un système externe.

6. Procédé selon l'une des revendications 1 à 5, **caractérisé en ce que** le ou les modèles dérivés ($\tilde{M}_a$, $\tilde{M}_b$ ...) sont vérifiés de façon continue ou cyclique ou sur la base d'événements et éventuellement adaptés automatiquement.

7. Procédé selon l'une des revendications 1 à 6, **caractérisé en ce que** lors d'un changement du ou des modèles de départ ($M_1$, $M_2$...) et/ou lors d'un changement d'un modèle de composant (KM), par exemple à cause de modifications de la construction de l'installation de compresseurs, le ou les modèles dérivés ($\tilde{M}_a$, $\tilde{M}_b$ ...) sont également adaptés.

8. Procédé selon l'une des revendications 1 à 7, **caractérisé en ce que** différents modèles de départ ($M_1$, $M_2$...) spécifiques de domaines, en particulier un ou plusieurs modèles de départ spécifiques de l'air comprimé, un ou plusieurs modèles de départ spécifiques de l'alimentation électrique, un ou plusieurs modèles de départ concernant l'alimentation électrique ou un ou plusieurs modèles de départ concernant la récupération de chaleur sont pris en compte.

9. Procédé selon l'une des revendications 1 à 8, **caractérisé en ce que** le modèle dérivé ($\tilde{M}_a$, $\tilde{M}_b$ ...) est un modèle intermédiaire ($M_1'$, $M_2'$...) qui tient aussi compte, par rapport au(x) modèle(s) de départ, d'un comportement dynamique ou d'états de fonctionnement différents de l'installation de compresseurs.

10. Procédé selon l'une des revendications 1 à 9, **caractérisé en ce que** le modèle dérivé ($\tilde{M}_a$, $\tilde{M}_b$ ...) est un modèle intermédiaire ($AAM_1$, $AAM_2$...) adapté et éventuellement simplifié par rapport à un ou plusieurs modèles de départ ($M_1$, $M_2$...) ou à un ou plusieurs autres modèles intermédiaires ($M_1'$, $M_2'$...) d'une façon spécifique de l'aspect.

11. Procédé selon l'une des revendications 1 à 10, **caractérisé en ce que** le ou les modèles de départ ($M_1$, $M_2$...) sont fondés sur la configuration concrète de l'installation de compresseurs prenant la forme d'un schéma de tuyauterie et d'instrumentation, qui est saisie par l'intermédiaire d'un éditeur (23), en particulier après la construction de l'installation de compresseurs.

12. Procédé pour surveiller une installation de compresseurs selon la revendication 1, dans lequel l'installation de compresseurs est commandée et/ou surveillée par une unité de commande/de surveillance (22),

lequel procédé génère un pronostic de date d'entretien suivante de l'installation de compresseurs ou de certains compresseurs ou de certains appareils périphériques, **caractérisé en ce que,**

- en particulier après la création de l'installation de compresseurs, la configuration concrète est saisie sous la forme d'un schéma de tuyauterie et d'instrumentation par l'intermédiaire d'un éditeur (23) et cette saisie sert de base à l'un ou aux plusieurs modèles de départ et

- **en ce qu'**un pronostic de date d'entretien suivante est généré en tenant compte de données d'exploitation standardisées de l'installation de compresseurs, en utilisant le ou les modèles dérivés ($\tilde{M}_a$, $\tilde{M}_b$ ...).

13. Procédé pour surveiller une installation de compresseurs selon la revendication 1, dans lequel l'installation de compresseurs est commandée et/ou surveillée par une unité de commande/de surveillance (22),

lequel procédé est conçu comme un procédé de diagnostic pour le diagnostic de l'installation de compresseurs ou de certains compresseurs ou de certains appareils périphériques, **caractérisé en ce que**,

   - en particulier après la création de l'installation de compresseurs, la configuration concrète est saisie sous la forme d'un schéma de tuyauterie et d'instrumentation par l'intermédiaire d'un éditeur (23) et cette saisie sert de base à l'un ou aux plusieurs modèles de départ et
   - **en ce qu'**un diagnostic des erreurs est exécuté en tenant compte de données d'exploitation standardisées de l'installation de compresseurs, en utilisant le ou les modèles dérivés ($\tilde{M}_a$, $\tilde{M}_b$ ...).

14. Installation de compresseurs comprenant un ou plusieurs compresseurs (11, 12, 13) et un ou plusieurs appareils périphériques (14 à 21) ainsi qu'une unité de commande/de surveillance (22),

dans laquelle les compresseurs (11, 12, 13) et les appareils périphériques (14 à 21) sont disposés et connectés selon une configuration prédéterminée,

dans laquelle l'installation de compresseurs est commandée et/ou surveillée par une unité de commande/de surveillance (22),

**caractérisée en ce que** l'unité de commande/de surveillance (22) est conformée et construite de telle manière qu'elle fasse appel, pour les routines de commande, de surveillance, de diagnostic ou d'analyse à un ou plusieurs modèles dérivés ($\tilde{M}_a$, $\tilde{M}_b$ ...) de l'installation de compresseurs créé(s) sur la base d'un ou plusieurs modèles de départ ($M_1$, $M_2$...) de l'installation de compresseurs, mais prenne en compte aussi des relations d'action entre les différents compresseurs (11, 12, 13) et les appareils périphériques (14 à 21) et, le cas échéant, des processus dynamiques, les un ou plusieurs modèles dérivés ($\tilde{M}_a$, $\tilde{M}_b$ ...) étant des modèles spécifiques de l'aspect (AM) qui sont créés en utilisant un algorithme d'analyse spécifique de l'aspect tiré de l'un ou des plusieurs modèles de départ ($M_1$, $M_2$...) ou de l'un ou des plusieurs modèles de départ ($M_1$, $M_2$...)

via un ou plusieurs modèles intermédiaires ($M_1$', $M_2$'... $AAM_1$, $AAM_2$ ...).

15. Installation de compresseurs selon la revendication 14, **caractérisée en ce que** l'unité de commande/de surveillance assure l'enregistrement du ou des modèles dérivés ($\tilde{M}_1$, $\tilde{M}_2$ ..).

16. Installation de compresseurs selon la revendication 14 ou 15, **caractérisée en ce que** l'unité de commande/de surveillance (22) est implémentée entièrement ou partiellement dans un ou plusieurs serveurs en liaison active les uns avec les autres ou dans un ou plusieurs ordinateurs virtuels.

17. Installation de compresseurs selon l'une des revendications 14 à 16, comprenant un éditeur (23) en plus de l'unité de commande/de surveillance, **caractérisée en ce que** l'éditeur (23) est conçu pour la saisie de la configuration concrète de l'installation de compresseurs sous la forme d'un schéma de tuyauterie et d'instrumentation et l'éditeur (23) est en liaison active avec l'unité de commande/de surveillance (22) de telle manière que le schéma de tuyauterie et d'instrumentation saisi soit transmis à l'unité de commande/de surveillance (22) pour servir de base à la création d'un ou plusieurs modèles de départ ($M_1$, $M_2$...).

18. Unité de commande/de surveillance pour la commande et/ou la surveillance d'une installation de compresseurs comprenant un ou plusieurs compresseurs (11, 12, 13) et un ou plusieurs appareils périphériques (14 à 21),

dans laquelle les compresseurs (11, 12, 13) et les appareils périphériques (14 à 21) sont disposés et connectés selon une configuration prédéfinie et l'unité de commande/de surveillance exécute la commande et/ou la surveillance de l'installation de compresseurs,

**caractérisée en ce qu'**un ou plusieurs modèles dérivés ($\tilde{M}_a$, $\tilde{M}_b$ ...), prenant en compte des relations d'action entre les différents compresseurs (11, 12, 13) et les appareils périphériques (14 à 21) et éventuellement aussi des processus dynamiques, sont créés sur la base d'un ou plusieurs modèles de départ ($M_1$, $M_2$...) de l'installation de compresseurs, basés par exemple sur un schéma de tuyauterie et d'instrumentation, incluant éventuellement les spécifications des compresseurs (11, 12, 13) et des appareils périphériques (14 à 21), les un ou plusieurs modèles dérivés ($\tilde{M}_a$, $\tilde{M}_b$ ...) étant des modèles spécifiques de l'aspect (AM) qui sont créés en utilisant un algorithme d'analyse spécifique de l'aspect tiré de l'un ou des plusieurs modèles de départ ($M_1$, $M_2$...) ou de l'un ou des plusieurs modèles de départ ($M_1$, $M_2$...) via un ou plusieurs modèles intermédiaires ($M_1$', $M_2$'... $AAM_1$, $AAM_2$ ...), et

**en ce que** les un ou plusieurs modèles dérivés ($\tilde{M}_a$, $\tilde{M}_b$ ...) servent de base aux routines de commande, de surveillance, de diagnostic ou d'analyse qui suivent.

**Fig. 1**

**Fig. 2**

**Fig. 3**

WENN „V1 OFFEN" UND „V2 GESCHLOSSEN" DANN

SONST

**Fig. 4**

**Fig. 5**

```
WENN V1 „offen" UND V2 „offen"
     T1: K1, K2, K3
     T2: K1, K2, K3
WENN V1 „offen" UND V2 „geschlossen"
     T1: K1, K2
     T2: K3
WENN V1 „geschlossen" UND V2 „offen"
     T1: K1
     T2: K2, K3
WENN V1 „geschlossen" UND V2 „geschlossen"
     T1: K1
     T2: K3
```

**Fig. 6**

**Fig. 7**

Fig. 8

Fig. 9

**Fig. 10**

**Fig. 11**

Fig. 12

**EP 2 778 412 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011079732 A1
- DE 102008064491 A1
- US 20030097243 A1
- WO 2010072803 A1